(19) Europäisches Patentamt
European Patent Office
Office européen des brevets

(11) **EP 4 400 543 A1**

(12) **EUROPEAN PATENT APPLICATION**
published in accordance with Art. 153(4) EPC

(43) Date of publication:
**17.07.2024 Bulletin 2024/29**

(21) Application number: **23874055.9**

(22) Date of filing: **17.08.2023**

(51) International Patent Classification (IPC):
*C08L 51/04* $^{(2006.01)}$   *C08L 33/06* $^{(2006.01)}$
*C08L 33/12* $^{(2006.01)}$   *C08L 25/08* $^{(2006.01)}$
*C08K 5/00* $^{(2006.01)}$   *C08K 5/3475* $^{(2006.01)}$
*C08K 5/101* $^{(2006.01)}$

(52) Cooperative Patent Classification (CPC):
**C08K 5/00; C08K 5/101; C08K 5/3475;**
**C08L 25/08; C08L 33/06; C08L 33/12; C08L 51/04**

(86) International application number:
**PCT/KR2023/012213**

(87) International publication number:
**WO 2024/085398 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022 KR 20220135348**
**20.10.2022 KR 20220135354**

(71) Applicant: **LG Chem, Ltd.**
**Yeoui-daero, Youngdungpo-gu**
**Seoul 07336 (KR)**

(72) Inventors:
• **CHO, Yun Kyoung**
**Daejeon 34122 (KR)**

• **KIM, Tae Hoon**
**Daejeon 34122 (KR)**
• **PARK, Chun Ho**
**Daejeon 34122 (KR)**
• **AN, Yong Hee**
**Daejeon 34122 (KR)**
• **KIM, Ho Hoon**
**Daejeon 34122 (KR)**
• **JANG, Jeongmin**
**Daejeon 34122 (KR)**
• **YOON, Hyeok Jun**
**Daejeon 34122 (KR)**

(74) Representative: **Plasseraud IP**
**66, rue de la Chaussée d'Antin**
**75440 Paris Cedex 09 (FR)**

(54) **THERMOPLASTIC RESIN COMPOSITION, METHOD FOR MANUFACTURING SAME, AND MOLDED ARTICLE COMPRISING SAME**

(57)   The present invention relates to a thermoplastic resin composition, a method of preparing the same, and a molded article including the same. More particularly, the present invention relates to a thermoplastic resin composition including 100 parts by weight of a base resin including an alkyl acrylate-aromatic vinyl compound-vinyl cyanide compound graft copolymer (A) containing alkyl acrylate rubber and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and 0.1 to 6 parts by weight of an acrylic copolymer (C), wherein the thermoplastic resin composition has an alkyl acrylate coverage (X) value of 65 % by weight or more as calculated by Equation 1, a method of preparing the thermoplastic resin composition, and a molded article including the thermoplastic resin composition.

According to the present invention, the present invention has an effect of providing a thermoplastic resin composition having excellent processability and film processability due to excellent mechanical properties, such as impact strength, tensile strength, and flexural strength, and fluidity, being applicable to unpainted materials due to excellent transparency, and non-whitening properties that prevent occurrence of whitening when bent or struck, and being capable of providing an aesthetically pleasing appearance due to excellent UV shielding capability in short wavelengths with high energy, a method of preparing the thermoplastic resin com-

EP 4 400 543 A1

position, and a molded article including the thermoplastic resin composition.

[FIG. 2]

## Description

[Technical Field]

[Cross-Reference to Related Applications]

This application claims priority to Korean Patent Application No. 10-2022-0135354, filed on October 20, 2022, and Korean Patent Application No. 10-2022-0135348, filed on October 20, 2022, in the Korean Intellectual Property Office, the disclosures of each of which are incorporated herein by reference.

The present invention relates to a thermoplastic resin composition, a method of preparing the same, and a molded article including the same. More particularly, the present invention relates to a thermoplastic resin composition having excellent processability and film processability due to excellent mechanical properties, such as impact strength, tensile strength, and flexural strength, and fluidity, and being applicable to unpainted materials due to excellent transparency, and non-whitening properties that prevent occurrence of whitening when bent or struck, a method of preparing the thermoplastic resin composition, and a molded article including the thermoplastic resin composition.

[Background Art]

Acrylonitrile-butadiene-styrene resins (hereinafter referred to as "ABS resins"), which are based on conjugated diene rubber, have excellent processability, mechanical properties, and appearance properties and are used in various fields such as parts for electrical and electronic products, automobiles, small toys, furniture, and building materials. However, since ABS resins are based on butadiene rubber, which contains chemically unstable unsaturated bonds, rubber polymers contained in ABS resins are easily damaged by ultraviolet rays. As a result, ABS resins have very poor weather resistance and are not suitable as outdoor materials.

To overcome the problems of ABS resins, acrylic copolymers that do not have ethylenically unsaturated bonds are used. A representative acrylic copolymer is an acrylate-styrene-acrylonitrile graft copolymer (hereinafter referred to as "ASA resin"). ASA resins have excellent physical properties such as processability, impact resistance, chemical resistance, and weather resistance. Due to these advantages, ASA resins are used in various fields such as building materials, interior and exterior materials for automobiles and motorcycles, electrical and electronic products, ships, leisure products, and horticultural products, and demand thereof is rapidly increasing.

In addition, as the demand for emotional quality and high quality increases in the market, research is being conducted to achieve a luxurious appearance and excellent colorability and weather resistance by finishing the outer surface of materials such as an ABS resin, PVC, and steel plate with an ASA resin. Generally, such a finishing material is manufactured in the form of a film and then undergoes a bending process such as bending and folding according to the shape of an applied substrate to produce a final product. However, due to the nature of the thermoplastic ASA resin, there is a problem that whitening occurs when the above finishing treatment is applied at room temperature, causing the original color to be lost and aesthetics to be impaired. In addition, films made of ASA resins are painted to achieve desired colors and textures depending on the application areas. Recently, the demand for unpainted materials that do not require painting is increasing for eco-friendliness and cost reduction. Furthermore, due to the nature of transparent finishing materials, in addition to weather resistance, UV shielding capability is required to prevent discoloration of a substrate.

Therefore, it is necessary to develop a materials having excellent mechanical properties, processability, film processability, and UV shielding capability and being capable of preventing occurrence of whitening during bending processing.

[Related Art Documents]

[Patent Documents]

KR 2009-0095764 A

[Disclosure]

[Technical Problem]

Therefore, the present invention has been made in view of the above problems, and it is one object of the present invention to provide a thermoplastic resin composition having excellent processability and film processability due to excellent mechanical properties, such as impact strength, tensile strength, and flexural strength, and fluidity, having excellent transparency, and non-whitening properties, having excellent UV shielding capability in short wavelengths with high energy, and having a luxurious appearance.

It is another object of the present invention to provide a method of preparing the thermoplastic resin composition.

It is yet another object of the present invention to provide a molded article manufactured using the thermoplastic resin composition.

The above and other objects can be accomplished by the present invention described below.

[Technical Solution]

I) In accordance with one aspect of the present invention, provided is a thermoplastic resin composition including 100 parts by weight of a base resin including an alkyl acrylate-aromatic vinyl compound-vinyl cyanide compound graft copolymer (A) containing alkyl acrylate rubber and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and 0.1 to 6 parts by weight of an acrylic copolymer (C), wherein the thermoplastic resin composition has an alkyl acrylate coverage (X) value of 65 % by weight or more as calculated by Equation 1 below.

$$[\text{Equation 1}]\ X = \{(G-Y)/Y\} \times 100,$$

wherein G represents a gel content (wt%) based on a total weight of the thermoplastic resin composition, and Y represents an alkyl acrylate content (wt%) in a gel based on a total weight of the thermoplastic resin composition.

II) According to I), the base resin may preferably include 41 to 80 % by weight of the alkyl acrylate-aromatic vinyl compound-vinyl cyanide compound graft copolymer (A) containing alkyl acrylate rubber having an average particle diameter of 50 to 120 nm and 20 to 59 % by weight of the one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2).

III) According to I) or II), the base resin may preferably include 45 to 75 % by weight of the graft copolymer (A), 5 to 45 % by weight of the polymer (b-1), and 1 to 35 % by weight of the polymer (b-2).

IV) According to I) to III), the thermoplastic resin composition may preferably include 0.3 to 4.5 parts by weight of a benzotriazole-based UV stabilizer (D).

V) According to I) to IV), the benzotriazole-based UV stabilizer (D) may preferably include one or more selected from the group consisting of 2-(2'-hydroxy-5'-t-octylphenyl)-benzotriazole, 2-(2'-hydroxy-5'-methylphenyl)benzotriazole, 2-(2'-hydroxy-3'-tert-butyl-5'-methylphenyl)-5-chloro-benzotriazole, 2-(2'-hydroxy-3',5'-di-tert-butylphenyl)-5-chloro-benzotriazole, 2-(2'-hydroxy-3,5-di-tert-amylphenyl)benzotriazole, 2-[2'-hydroxy-3',5'-di(1,1-dimethylbenzyl)phenyl]-2H-benzotriazole, 2-(2'-hydroxy-3',5'-di-t-butylphenyl)benzotriazole, and 2-(2H-benzotrizole-2-yl)-4-(1,1,3,3-tetramethylbutyl)phenol.

VI) According to I) to V), based on a total weight of the graft copolymer (A), the graft copolymer (A) may preferably include 25 to 50 % by weight of alkyl acrylate rubber having an average particle diameter of 50 to 120 nm and 50 to 75 % by weight of an aromatic vinyl compound-vinyl cyanide compound copolymer surrounding the alkyl acrylate rubber.

VII) According to I) to VI), based on a total weight of the graft copolymer (A), the graft copolymer (A) may preferably include 25 to 50 % by weight of alkyl acrylate rubber and 50 to 75 % by weight of an aromatic vinyl compound-vinyl cyanide compound copolymer surrounding the alkyl acrylate rubber.

VIII) According to I) to VII), the graft copolymer (A) may preferably have a grafting degree of 58 % or more as calculated by Equation 3 below.

Grafting degree (%) = [Weight (g) of grafted monomers/Rubber weight (g)] × 100.

wherein the weight (g) of grafted monomers is obtained by subtracting rubber weight (g) from a weight (g) of insoluble matter (gel) obtained by dissolving the graft copolymer in acetone and performing centrifugation, and the rubber weight (g) is a weight (g) of rubber components theoretically added to graft copolymer powder.

IX) According to I) to VIII), the polymer (b-1) and the polymer (b-2) may each independently have a weight average molecular weight of preferably 50,000 to 150,000 g/mol.

X) According to I) to IX), the polymer (b-2) may preferably include 60 to 90 % by weight of an alkyl (meth)acrylate, 5 to 30 % by weight of an aromatic vinyl compound, and 1 to 20 % by weight of a vinyl cyanide compound.

XI) According to I) to X), the acrylic copolymer (C) may preferably include an alkyl acrylate-based crosslinking body including 5 to 20 % by weight of an alkyl acrylate monomer and 0.01 to 0.3 % by weight of a crosslinking agent; 54 to 90 % by weight of a methyl methacrylate monomer; and 4 to 40 % by weight of one or more selected from the group consisting of an alkyl acrylate monomer and an alkyl methacrylate monomer.

XII) According to I) to XI), the crosslinking agent may preferably include one or more selected from the group consisting of ally methacrylate, trimethylol propane, triacrylate, and divinyl benzene.

XIII) According to I) to XII), the acrylic copolymer (C) may preferably have a weight average molecular weight of 900,000 to 1,300,000 g/mol.

XIV) According to I) to XIII), the thermoplastic resin composition may preferably have a haze of 5.7 % or less as measured using an injection specimen according to ASTM D1003.

XV) According to I) to XIV), the thermoplastic resin composition may preferably have a haze of 10 % or less as measured according to ASTM D1003 after an Erichsen cupping test performed by cupping a 9 mm region of a film having a thickness of 0.15 mm at a motor speed of 7 rpm for 1 minute using an Erichsen cupping tester.

XVI) According to I) to XV), the thermoplastic resin composition may preferably have a light transmittance of 8 % or less as measured at 380 nm using a sheet having a thickness of 0.15 mm and a UV-visible light spectrophotometer.

XVII) In accordance with another aspect of the present invention, provided is a method of preparing a thermoplastic resin composition, the method including kneading and extruding 100 parts by weight of a base resin including an alkyl acrylate-aromatic vinyl compound-vinyl cyanide compound graft copolymer (A) containing alkyl acrylate rubber and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and 0.1 to 6 parts by weight of an acrylic copolymer (C) at 200 to 300 °C and 100 to 500 rpm, wherein the thermoplastic resin composition has an alkyl acrylate coverage (X) value of 65 % by weight or more as calculated by Equation 1 below.

[Equation 1]

$$X = \{(G-Y)/Y\} \times 100,$$

wherein G represents a gel content (wt%) based on a total weight of the thermoplastic resin composition, and Y represents an alkyl acrylate content (wt%) in a gel based on a total weight of the thermoplastic resin composition.

XVIII) In accordance with yet another aspect of the present invention, provided is a molded article including the thermoplastic resin composition according to any one of I) to XVI).

[Advantageous Effects]

According to the present invention, the present invention has an effect of providing a thermoplastic resin composition having excellent processability and film processability due to excellent mechanical properties, such as impact strength, tensile strength, and flexural strength, and fluidity, being capable of providing an aesthetically pleasing appearance due to excellent transparency, and non-whitening properties that prevent occurrence of whitening when bent or struck, and being applicable to unpainted materials, a method of preparing the thermoplastic resin composition, and a molded article including the thermoplastic resin composition.

In addition, according to the present invention, the present invention has an effect of providing a thermoplastic resin composition having a luxurious appearance due to excellent UV shielding capability in short wavelengths with high energy, a method of preparing the same, and a molded article including the same.

In addition, the present invention has an effect of providing a molded article including the thermoplastic resin composition of the present invention. When the molded article is used as a finishing material, the molded article can provide physical properties superior to those required in the market.

[Description of Drawings]

FIG. 1 shows an Erichsen cupping tester that performs an Erichsen cupping test.
FIG. 2 shows the surfaces of films after performing an Erichsen cupping test on the films manufactured in Example 1 and Comparative Example 1.

[Best Mode]

Hereinafter, a thermoplastic resin composition of the present invention, a method of preparing the same, and a molded article including the same will be described in detail.

The present inventors confirmed that, while researching a thermoplastic resin composition capable of providing a finishing material having an aesthetically pleasing appearance and being applicable to unpainted materials, when a base resin including an alkyl acrylate-aromatic vinyl compound-vinyl cyanide compound graft copolymer and one or more selected from the group consisting of a (meth)acrylic acid alkyl ester polymer and a (meth)acrylic acid alkyl ester compound-aromatic vinyl compound-vinyl cyanide compound copolymer; and an acrylic copolymer were included in a predetermined content ratio, and the alkyl acrylate coverage value of the thermoplastic resin composition was adjusted within a predetermined range, mechanical properties, such as impact strength, tensile strength, and flexural strength, fluidity, transparency, and non-whitening properties were excellent, and processability, film processability, and appearance quality were greatly improved. Due to these advantages, the thermoplastic resin composition was applicable to unpainted materials. In addition, when a benzotriazole-based UV stabilizer was included in a small amount, weather resistance and UV shielding capability were also improved. Based on these results, the present inventors conducted further studies to complete the present invention.

The thermoplastic resin composition of the present invention will be described in detail as follows.

The thermoplastic resin composition of the present invention includes 100 parts by weight of a base resin including an alkyl acrylate-aromatic vinyl compound-vinyl cyanide compound graft copolymer (A) containing alkyl acrylate rubber and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and 0.1 to 6 parts by weight of an acrylic copolymer (C). The thermoplastic resin composition has an alkyl acrylate coverage (X) value of 65 % by weight or more as calculated by Equation 1 below. In this case, due to excellent mechanical properties, such as impact strength, tensile strength, and flexural strength, and fluidity, the thermoplastic resin composition may have excellent processability and film processability, and the thermoplastic resin composition may be applicable to unpainted materials due to excellent transparency, and non-whitening properties that prevent occurrence of whitening when bent or struck.

$$[\text{Equation 1}] \; X = \{(G\text{-}Y)/Y\} \times 100$$

In Equation 1, G represents a gel content (wt%) based on a total weight of the thermoplastic resin composition, and Y represents an alkyl acrylate content (wt%) in a gel based on a total weight of the thermoplastic resin composition.

Hereinafter, each component of the thermoplastic resin composition of the present invention will be described in detail.

### (A) Alkyl acrylate-aromatic vinyl compound-vinyl cyanide compound graft copolymer containing alkyl acrylate rubber

For example, based on a total weight of the base resin, the graft copolymer (A) may be included in an amount of 41 to 80 % by weight, preferably 45 to 75 % by weight, more preferably 45 to 65 % by weight, still more preferably 47 to 55 % by weight. Within this range, mechanical properties, such as impact strength, tensile strength, and flexural strength, transparency, and processability may be excellent.

As another example, based on a total weight of the base resin, the graft copolymer (A) may be included in an amount of 45 to 75 % by weight, preferably 50 to 70 % by weight, still more preferably 50 to 60 % by weight. Within this range, mechanical properties, such as impact strength, tensile strength, and flexural strength, transparency, and processability may be excellent.

For example, the graft copolymer (A) may include alkyl acrylate rubber (core) and an aromatic vinyl compound-vinyl cyanide compound copolymer (shell) surrounding the alkyl acrylate rubber.

For example, based on a total weight of the graft copolymer (A), the graft copolymer (A) may include 25 to 50 % by weight, preferably 30 to 50 % by weight, more preferably 35 to 50 % by weight of alkyl acrylate rubber (core); and 50 to 75 % by weight, preferably 50 to 70 % by weight, more preferably 50 to 65 % by weight of an aromatic vinyl compound-vinyl cyanide compound copolymer (shell) surrounding the alkyl acrylate rubber. Within this range, mechanical properties, transparency, gloss, fluidity, and non-whitening properties may be excellent.

For example, the alkyl acrylate rubber may include alkyl acrylate rubber having an average particle diameter of 50 to 120 nm, preferably 60 to 120 nm, more preferably 80 to 110 nm. Within this range, excellent impact strength, gloss, and non-whitening properties may be imparted to a finally prepared thermoplastic resin composition.

In the present disclosure, the average particle diameter may be measured by dynamic light scattering, and specifically, may be measured as an intensity value using a Nicomp 380 particle size analyzer (manufacturer: PSS) in a Gaussian mode. As a specific measurement example, a sample may be prepared by diluting 0.1 g of latex (TSC: 35 to 50 wt%) 1,000 to 5,000-fold with distilled water, and the average particle diameter may be measured using flow cells in an auto-dilution manner and in a mode of dynamic light scattering/intensity 300 kHz/intensity-weight Gaussian analysis. At this time, temperature may be set to 23 °C, measurement wavelength may be set to 632.8 nm, and channel width may be set to 10 μsec.

For example, the alkyl acrylate rubber may be prepared by emulsion-polymerizing an alkyl acrylate. Preferably, the alkyl acrylate rubber may be prepared by mixing an acrylate-based compound, an emulsifier, an initiator, a grafting agent, a crosslinking agent, an electrolyte, and a solvent and emulsion-polymerizing the mixture. In this case, due to excellent grafting efficiency, mechanical properties may be excellent.

For example, the alkyl acrylate rubber may include an aromatic vinyl compound. In this case, mechanical properties may be further improved. For example, based on 100 % by weight in total of the alkyl acrylate rubber, the alkyl acrylate rubber may include an aromatic vinyl compound in an amount of 0.1 to 25 % by weight, preferably 2 to 23 % by weight, more preferably 5 to 20 % by weight. Within this range, mechanical properties, gloss, and transparency may be excellent without deteriorating physical properties.

For example, the alkyl acrylate rubber may include a seed, preferably a rubber seed.

For example, based on 100 % by weight of the graft copolymer (A), the seed may be prepared by polymerizing 1 to 20 % by weight, preferably 2 to 15 % by weight, more preferably 3 to 10 % by weight of one or more monomers selected from the group consisting of an aromatic vinyl compound, a vinyl cyanide compound, and an alkyl acrylate. Within this range, impact resistance, weather resistance, and physical property balance may be excellent.

For example, the aromatic vinyl compound-vinyl cyanide compound copolymer (shell) may have a weight average molecular weight of 40,000 to 120,000 g/mol, preferably 50,000 to 110,000 g/mol, more preferably 60,000 to 110,000 g/mol. Within this range, processability and non-whitening properties may be excellent without reducing impact strength.

In the present disclosure, unless otherwise defined, the weight average molecular weight may be measured using gel permeation chromatography (GPC, Waters Breeze). As a specific example, the weight average molecular weight may be measured using tetrahydrofuran (THF) as an eluate through gel permeation chromatography (GPC, Waters Breeze). In this case, weight average molecular weight is obtained as a relative value to a polystyrene (PS) standard sample. As a specific measurement example, the weight average molecular weight may be measured under conditions of solvent: THF, column temperature: 40 °C, flow rate: 0.3 ml/min, sample concentration: 20 mg/ml, injection amount: 5 μl, column model: 1× PLgel 10 μm MiniMix-B (250 × 4.6 mm) + 1× PLgel 10 μm MiniMix-B (250 × 4.6 mm) + 1× PLgel 10 μm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, based on a total weight of the aromatic vinyl compound-vinyl cyanide compound copolymer (shell), the aromatic vinyl compound-vinyl cyanide compound copolymer (shell) may include 55 to 85 % by weight of an aromatic vinyl compound and 15 to 45 % by weight of a vinyl cyanide compound, preferably 60 to 80 % by weight of an aromatic vinyl compound and 20 to 40 % by weight of a vinyl cyanide compound, more preferably 65 to 75 % by weight of an aromatic vinyl compound and 25 to 35 % by weight of a vinyl cyanide compound. Within this range, impact resistance and weather resistance may be excellent.

The aromatic vinyl compound-vinyl cyanide compound copolymer (shell) may preferably include an alkyl acrylate. In this case, the physical property balance between impact resistance, processability, and non-whitening properties may be excellent.

For example, based on 100 % by weight in total of the aromatic vinyl compound-vinyl cyanide compound copolymer (shell), the aromatic vinyl compound-vinyl cyanide compound copolymer (shell) may include 60 to 85 % by weight of an aromatic vinyl compound, 5 to 35 % by weight of a vinyl cyanide compound, and 1 to 20 % by weight of an alkyl acrylate, preferably 65 to 80 % by weight of an aromatic vinyl compound, 12 to 27 % by weight of a vinyl cyanide compound, and 5 to 15 % by weight of an alkyl acrylate, more preferably 70 to 75 % by weight of an aromatic vinyl compound, 17 to 22 % by weight of a vinyl cyanide compound, and 7 to 10 % by weight of an alkyl acrylate. Within this range, impact resistance and weather resistance may be excellent.

In the present disclosure, for example, the alkyl acrylate may be an alkyl acrylate containing an alkyl group having 1 to 15 carbon atoms. Preferably, the alkyl acrylate may include one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing an alkyl group having 1 to 4 carbon atoms, still more preferably butyl acrylate, ethylhexyl acrylate, or a mixture thereof.

In the present disclosure, for example, the aromatic vinyl compound may include one or more selected from the group consisting of styrene, α-methyl styrene, o-methyl styrene, ρ-methyl styrene, m-methyl styrene, ethyl styrene, isobutyl styrene, t-butyl styrene, o-bromostyrene, ρ-bromostyrene, m-bromostyrene, o-chlorostyrene, ρ-chlorostyrene, m-chlorostyrene, vinyltoluene, vinylxylene, fluorostyrene, and vinylnaphthalene, preferably one or more selected from the group consisting of styrene and α-methyl styrene, still more preferably styrene. In this case, due to appropriate fluidity, processability and impact resistance may be excellent.

In the present disclosure, for example, the vinyl cyanide compound may include one or more selected from the group consisting of acrylonitrile, methacrylonitrile, phenylacrylonitrile, and α-chloroacrylonitrile, preferably acrylonitrile.

For example, the graft copolymer (A) may be prepared by emulsion polymerization. In this case, gloss and surface hardness may be excellent.

Emulsion polymerization methods commonly practiced in the art to which the present invention pertains may be used in the present invention without particular limitation. For example, an emulsion graft polymerization method may be used.

In the present disclosure, a polymer including a certain compound (monomer) means a polymer prepared by polymerizing the compound (monomer), and a unit in the polymer is derived from the compound.

For example, the graft copolymer (A) may have a grafting degree of 58 % or more, preferably 58 to 150 %, more preferably 65 to 140 %, still more preferably 65 to 130 %, still more preferably 65 to 100 %, still more preferably 65 to 80 % as calculated by Equation 3 below. Within this range, impact resistance, processability, and non-whitening properties may be excellent.

Grafting degree (%) = [Weight (g) of grafted monomers/Rubber weight (g)] $\times$ 100

In Equation 3, the weight (g) of grafted monomers is obtained by subtracting rubber weight (g) from the weight (g) of insoluble matter (gel) obtained by dissolving the graft copolymer in acetone and performing centrifugation, and the rubber weight (g) is the weight (g) of rubber components theoretically added to graft copolymer powder.

When the weight of insoluble matter (gel) is measured, 0.5 g of the powdered graft copolymer (A) is added to 50 ml of acetone, followed by stirring at room temperature for 12 hours. Then, centrifugation is performed to separate insoluble matter that is not dissolved in acetone, followed by drying for 12 hours. Then, the weight of the insoluble matter (gel) is measured. The rubber weight (g) is the weight (g) of rubber components theoretically added to 0.5 g of the powdered graft copolymer (A).

As a specific measurement example, when measuring the weight (g) of insoluble matter (gel), 0.5 g of a powdered graft copolymer is added to 50 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter (gel) is measured.

**(B) One or more selected from the group consisting of (meth)acrylic acid alkyl ester polymer (b-1) and (meth)acrylic acid alkyl ester compound-aromatic vinyl compound-vinyl cyanide compound copolymer (b-2)**

For example, based on 100 % by weight of the base resin, the one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2) may be included in an amount of 20 to 59 % by weight, preferably 25 to 55 % by weight, more preferably 35 to 55 % by weight, still more preferably 45 to 53 % by weight. Within this range, processability, transparency, and non-whitening properties may be excellent.

The one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2) may preferably be a mixture of a (meth)acrylic acid alkyl ester polymer (b-1) and a (meth)acrylic acid alkyl ester compound-aromatic vinyl compound-vinyl cyanide compound copolymer (b-2). In this case, transparency, weather resistance, and UV-visible light transmittance may be excellent.

The weight ratio (b-1:b-2) of the (meth)acrylic acid alkyl ester polymer (b-1) to the (meth)acrylic acid alkyl ester compound-aromatic vinyl compound-vinyl cyanide compound copolymer (b-2) may be preferably 7:3 to 8.2:1.8, more preferably 7.5:2.5 to 8:2. Within this range, transparency, weather resistance, and UV-visible light transmittance may be excellent.

**(b-1) (Meth)acrylic acid alkyl ester polymer**

For example, based on 100 % by weight of the base resin, the (meth)acrylic acid alkyl ester polymer (b-1) may be included in an amount of 10 to 59 % by weight, preferably 25 to 45 % by weight, more preferably 27 to 42 % by weight. Within this range, transparency, gloss, and non-whitening properties may be excellent while maintaining mechanical properties.

As another example, based on 100 % by weight of the base resin, the (meth)acrylic acid alkyl ester polymer (b-1) may be included in an amount of 5 to 45 % by weight, preferably 15 to 40 % by weight, more preferably 25 to 40 % by weight. Within this range, transparency, gloss, and non-whitening properties may be excellent while maintaining mechanical properties.

For example, the (meth)acrylic acid alkyl ester polymer (b-1) may include one or more selected from the group consisting of a (meth)acrylic acid methyl ester, a (meth)acrylic acid ethyl ester, a (meth)acrylic acid propyl ester, a (meth)acrylic acid 2-ethyl hexyl ester, a (meth)acrylic acid decyl ester, and a (meth)acrylic acid lauryl ester, preferably a methacrylic acid alkyl ester, an acrylic acid alkyl ester, or a mixture thereof, more preferably a polymethyl methacrylate resin. In this case, gloss, colorability, and scratch resistance may be excellent.

In the present disclosure, the (meth)acrylic acid alkyl ester polymer may be a polymer including a (meth)acrylic acid alkyl ester in an amount of greater than 85 % by weight, 90 % by weight or more, or 95 % by weight or more.

In the present disclosure, unless noted otherwise, the "acrylic acid alkyl ester" or the "methacrylic acid alkyl ester" may both mean the "(meth)acrylic acid alkyl ester".

For example, the polymethyl methacrylate resin may include methyl methacrylate and methyl acrylate. Preferably, the polymethyl methacrylate resin may include methyl acrylate in an amount of 1 to 10 % by weight, more preferably 2 to 7 % by weight. Within this range, due to excellent compatibility with the (meth)acrylic acid alkyl ester compound-aromatic vinyl compound-vinyl cyanide compound copolymer (b-2), transparency, fluidity, and impact resistance may be improved.

For example, the polymer (b-1) may have a weight average molecular weight of 50,000 to 150,000 g/mol, preferably 60,000 to 130,000 g/mol, more preferably 70,000 to 120,000 g/mol, still more preferably 80,000 to 110,000 g/mol. Within this range, transparency, non-whitening properties, and UV-visible total light transmittance may be excellent while maintaining impact resistance.

For example, the (meth)acrylic acid alkyl ester polymer (b-1) may have a glass transition temperature of 80 to 130 °C, preferably 90 to 120 °C. Within this range, heat resistance may be excellent.

In the present disclosure, the glass transition temperature may be measured using a differential scanning calorimeter (DSC) according to ASTM D3418. As a specific example, the glass transition temperature may be measured at a heating rate of 10 °C/min using a differential scanning calorimeter (Q100 DSC, TA Instruments Co.).

For example, the (meth)acrylic acid alkyl ester polymer (b-1) may be prepared by suspension polymerization. Suspension polymerization methods commonly practiced in the art to which the present invention pertains may be used in the present invention without particular limitation.

### (b-2) (Meth)acrylic acid alkyl ester compound-aromatic vinyl compound-vinyl cyanide compound copolymer

For example, based on 100 % by weight in total of the base resin, the polymer (b-2) may be included in an amount of 10 to 59 % by weight, preferably 17 to 40 % by weight, more preferably 12 to 32 % by weight. Within this range, compatibility with the (meth)acrylic acid alkyl ester polymer (b-1), mechanical properties, and fluidity may be excellent.

As another example, based on 100 % by weight in total of the base resin, the polymer (b-2) may be included in an amount of 1 to 35 % by weight, preferably 5 to 30 % by weight, more preferably 5 to 20 % by weight. Within this range, compatibility with the (meth)acrylic acid alkyl ester polymer (b-1), mechanical properties, and fluidity may be excellent.

For example, based on a total weight of the polymer (b-2), the polymer (b-2) may include 60 to 90 % by weight of a (meth)acrylic acid alkyl ester compound, 5 to 30 % by weight of an aromatic vinyl compound, and 1 to 20 % by weight of a vinyl cyanide compound. Within this range, compatibility with the graft copolymer (A) and the (meth)acrylic acid alkyl ester polymer (b-1), impact resistance, transparency, UV-visible light transmittance, and non-whitening properties may be excellent.

Preferably, based on a total weight of the polymer (b-2), the polymer (b-2) may include 65 to 85 % by weight of a (meth)acrylic acid alkyl ester compound, 10 to 25 % by weight of an aromatic vinyl compound, and 1 to 15 % by weight of a vinyl cyanide compound. Within this range, compatibility with the graft copolymer (A) and the (meth)acrylic acid alkyl ester polymer (b-1), mechanical properties, transparency, UV-visible light transmittance, and non-whitening properties may be excellent.

More Preferably, based on a total weight of the polymer (b-2), the polymer (b-2) may include 70 to 80 % by weight of a (meth)acrylic acid alkyl ester compound, 15 to 20 % by weight of an aromatic vinyl compound, and 5 to 10 % by weight of a vinyl cyanide compound. Within this range, compatibility with the graft copolymer (A) and the (meth)acrylic acid alkyl ester polymer (b-1), mechanical properties, transparency, UV-visible light transmittance, and non-whitening properties may be excellent.

In the present disclosure, for example, the (meth)acrylic acid alkyl ester compound may include one or more selected from the group consisting of a (meth)acrylic acid methyl ester, a (meth)acrylic acid ethyl ester, a (meth)acrylic acid propyl ester, a (meth)acrylic acid 2-ethyl hexyl ester, a (meth)acrylic acid decyl ester, and a (meth)acrylic acid lauryl ester.

The types of aromatic vinyl compound and vinyl cyanide compound included in the polymer (b-2) may be the same as the types of aromatic vinyl compound and vinyl cyanide compound included in the graft copolymer (A) of the present invention.

For example, the polymer (b-2) may have a weight average molecular weight of 50,000 to 150,000 g/mol, preferably 50,000 to 140,000 g/mol, more preferably 600,000 to 130,000 g/mol, still more preferably 70,000 to 130,000 g/mol. Within this range, tensile strength, flexural strength, impact strength, and non-whitening properties may be excellent.

For example, the polymer (b-2) may be prepared by bulk polymerization. Bulk polymerization methods commonly practiced in the art to which the present invention pertains may be used in the present invention without particular limitation.

## (C) Acrylic copolymer

For example, based on 100 parts by weight of the base resin, the acrylic copolymer (C) may be included in an amount of 0.1 to 6 parts by weight, preferably 0.5 to 5 parts by weight, more preferably 0.5 to 4 parts by weight, still more preferably 0.5 to 3.5 parts by weight, still more preferably 0.8 to 3 parts by weight, still more preferably 0.8 to 2.5 parts by weight. Within this range, mechanical properties, fluidity, transparency, non-whitening properties, and film processability may be excellent.

For example, based on a total weight of the acrylic copolymer (C), the acrylic copolymer (C) may include an alkyl acrylate-based crosslinking body including 5 to 20 % by weight of an alkyl acrylate monomer and 0.01 to 0.3 % by weight of a crosslinking agent; 54 to 90 % by weight of a methyl methacrylate monomer; and 4 to 40 % by weight of one or more selected from the group consisting of an alkyl acrylate monomer and an alkyl methacrylate monomer. In this case, mechanical properties, fluidity, transparency, non-whitening properties, and film processability may be excellent.

For example, the crosslinking agent may include one or more selected from the group consisting of aryl methacrylate, trimethylol propane, triacrylate, and divinyl benzene.

In the present disclosure, a crosslinking body may refer to a polymer with increased molecular weight due to extension of the chains thereof by a crosslinking agent. In the present invention, the alkyl acrylate-based crosslinking body plays a role in improving die swelling properties by increasing the swelling degree of the acrylic copolymer.

For example, the alkyl acrylate-based crosslinking body may have a swelling index of 3 to 10, preferably 4 to 9. Within this range, film processability may be excellent.

In the present disclosure, to calculate swelling index, acetone is added to 1 g of alkyl acrylate-based crosslinking body powder, stirring is performed at room temperature for 24 hours, centrifugation is performed to obtain a fraction not dissolved in acetone, and then the fraction is dried. Then, the weights of the fraction before and after drying are measured, and swelling index is calculated by Equation 5 below.

Swelling index = Weight (g) before drying after centrifugation/weight (g) after drying after centrifugation

For example, the alkyl acrylate compound of the crosslinking body may be a linear, branched, or cyclic compound containing an alkyl group having 1 to 18 carbon atoms.

For example, the alkyl acrylate compound as a monomer may be a linear, branched, or cyclic compound containing an alkyl group having 1 to 18 carbon atoms. Preferably, the alkyl acrylate compound as a monomer may include one or more selected from the group consisting of methyl acrylate, ethyl acrylate, n-butyl acrylate, lauryl acrylate, stearyl acrylate, 2-ethylhexyl acrylate, and cyclohexyl acrylate.

For example, the alkyl methacrylate compound as a monomer may be a linear, branched, or cyclic compound containing an alkyl group having 2 to 18 carbon atoms. Preferably, the alkyl methacrylate compound as a monomer may include one or more selected from the group consisting of n-butyl methacrylate, lauryl methacrylate, stearyl methacrylate, tridecyl methacrylate, i-butyl methacrylate, t-butyl methacrylate, 2-ethylhexyl methacrylate, and cyclohexyl methacrylate.

For example, the acrylic copolymer (C) may be prepared by emulsion polymerization, suspension polymerization, or solution polymerization, preferably emulsion polymerization. In this case, processability and impact strength may be excellent.

Emulsion polymerization, suspension polymerization, and solution polymerization methods commonly practiced in the art to which the present invention pertains may be used in the present invention without particular limitation.

A method of preparing the acrylic copolymer (C) may preferably include a step (i) of preparing an alkyl acrylate-based crosslinking body having a swelling degree of 3 to 10 by including 5 to 20 parts by weight of an alkyl acrylate-based monomer and 0.01 to 0.3 parts by weight of a crosslinking agent; a step (ii) of, before or after the step (i) of preparing the alkyl acrylate-based crosslinking body, adding 27.5 to 45 parts by weight of methyl methacrylate, 2 to 20 parts by weight of one or more monomers selected from the group consisting of an alkyl acrylate compound containing an alkyl group having 1 to 18 carbon atoms and an alkyl methacrylate compound containing an alkyl group having 2 to 18 carbon atoms, an emulsifier, a crosslinking agent, a polymerization initiator, and a redox catalyst and performing emulsion polymerization to prepare a polymer; and a step of adding 27.5 to 45 parts by weight of methyl methacrylate, 2 to 20 parts by weight of one or more monomers selected from the group consisting of an alkyl acrylate compound containing an alkyl group having 1 to 18 carbon atoms and an alkyl methacrylate compound containing an alkyl group having 2 to 18 carbon atoms, an emulsifier, a crosslinking agent, a polymerization initiator, and a redox catalyst to the alkyl acrylate-based crosslinking body prepared in the step (i) and the polymer prepared in the step (ii) to complete emulsion polymerization. In this case, mechanical properties, transparency, and non-whitening properties may be excellent. In addition, due to reduced flowability, processability and film processability may be excellent.

For example, the steps (i) and (ii) may be performed in separate locations or reactors.

For example, the acrylic copolymer (C) may have a weight average molecular weight of 900,000 to 1,300,000 g/mol, preferably 950,000 to 1,250,000 g/mol, more preferably 1,000,000 to 1,200,000 g/mol. Within this range, mechanical properties may be excellent, and flowability may be improved.

For example, the acrylic copolymer (C) may have a relative viscosity of 1.0 to 10.0, preferably 1.5 to 7.0, more preferably 1.8 to 5.5, still more preferably 2.0 to 4.0 as measured according to ISO 3105. Within this range, fluidity may be improved, and film processability may be excellent.

The acrylic copolymer (C) may be prepared, or a commercially available product may be used as long as the product follows the definition of the present invention.

### (D) Benzotriazole-based UV stabilizer

For example, based on 100 parts by weight of the base resin, the benzotriazole-based UV stabilizer (D) may be included in an amount of 0.3 to 4.5 parts by weight, preferably 0.7 to 3 parts by weight, more preferably 0.7 to 2.5 parts by weight, still more preferably 0.7 to 1.5 parts by weight. Within this range, mechanical properties, fluidity, transparency, gloss, weather resistance, and UV shielding capability may be excellent.

For example, the benzotriazole-based UV stabilizer (D) may include one or more selected from the group consisting of (2-(2'-hydroxy-5'-t-octylphenyl)-benzotriazole, 2-(2'-hydroxy-5'-methylphenyl)benzotriazole, 2-(2'-hydroxy-3'-tert-butyl-5'-methylphenyl)-5-chloro-benzotriazole,     2-(2'-hydroxy-3',5'-di-tert-butylphenyl)-5-chlorobenzotriazole, 2-(2'-hydroxy-3,5-di-tert-amylphenyl)benzotriazole, 2-[2'-hydroxy-3',5'-di(1,1-dimethylbenzyl)phenyl]-2H-benzotriazole, 2-(2'-hydroxy-3',5'-di-t-butylphenyl)benzotriazole,    and    2-(2H-benzotrizole-2-yl)-4-(1,1,3,3-tetramethylbutyl)phenol. Preferably, the benzotriazole-based UV stabilizer (D) may be 2-(2'-hydroxy-3'-tert-butyl-5'-methylphenyl)-5-chloro-benzotriazole, 2-[2'-hydroxy-3',5'-di(1,1-dimethylbenzyl)phenyl]-2H-benzotriazole, or a mixture thereof, more preferably 2-(2'-hydroxy-3'-tert-butyl-5'-methylphenyl)-5-chloro-benzotriazole. In this case, mechanical properties, fluidity, transparency, gloss, weather resistance, and UV shielding capability may be excellent.

### Thermoplastic resin composition

The thermoplastic resin composition may have an alkyl acrylate coverage value (X) of 65 % by weight or more, preferably 75 % by weight or more, more preferably 85 % by weight or more, still more preferably 85 to 130 % by weight, still more preferably 85 to 120 % by weight as calculated by Equation 1 below. Within this range, mechanical properties, such as tensile strength, flexural strength, and impact strength, fluidity, transparency, and gloss may be excellent. In particular, due to excellent non-whitening properties, occurrence of whitening may be prevented during bending processing.

[Equation 1]

$$X = \{(G-Y)/Y\} \times 100$$

In Equation 1, G represents a gel content (wt%) based on a total weight of the thermoplastic resin composition, and Y represents an alkyl acrylate content (wt%) in a gel based on a total weight of the thermoplastic resin composition.

In Equation 1, the alkyl acrylate content in the gel of the thermoplastic resin composition refers to an alkyl acrylate content (based on 100% by weight in total of the added thermoplastic resin) in the insoluble matter collected in the process of calculating a gel content described above. Here, the gel content refers to the content of insoluble matter based on 100% by weight in total of the thermoplastic resin.

The alkyl acrylate content is quantitatively measured through nuclear magnetic resonance (NMR) analysis or Fourier transform infrared spectroscopy (FT-IR) analysis.

In the present disclosure, unless otherwise specified, NMR analysis means analysis by $^1$H NMR.

In the present disclosure, NMR analysis may be performed using methods commonly practiced in the art. Specific measurement examples are as follows.

- Equipment name: Bruker 600MHz NMR(AVANCE III HD) CPP BB(1H 19F tunable and broadband, with z-gradient) Prodigy Probe
- Measurement conditions: 1H NMR(zg30): ns=32, d1=5s, TCE-d2, at room temp.

In the present disclosure, FT-IR analysis may be performed using methods commonly practiced in the art. Specific measurement examples are as follows.

- Equipment name: Agilent Cary 660
- Measurement conditions: ATR mode

When measuring the gel content, 1 g of a thermoplastic resin composition is added to 30 ml of acetone, followed by stirring at room temperature for 12 hours. Then, centrifugation is performed to separate insoluble matter that is not dissolved in acetone, followed by drying for 12 hours. Then, the weight of the insoluble matter is measured, and the gel content is calculated by Equation 2 below. As a specific measurement example, when measuring the gel content, 1 g of a thermoplastic resin composition is added to 30 ml of acetone, followed by stirring at 210 rpm and room temperature using an orbital shaker (equipment name: Lab companion SKC-6075) for 12 hours. Then, centrifugation is performed at 0 °C and 18,000 rpm for 3 hours using a centrifuge (Supra R30, Hanil Science Co.) to separate insoluble matter that is not dissolved in acetone, followed by drying in a forced convection oven (equipment name: Lab companion OF-12GW) set to 85 °C for 12 hours via forced circulation. Then, the weight of the insoluble matter is measured.

Gel content (w%) = [Weight (g) of insoluble matter (gel)/Weight (g) of sample] × 100.

In the present disclosure, the alkyl acrylate coverage value is a parameter that indicates the degree of dispersion of the aromatic vinyl compound-vinyl cyanide compound polymer grafted onto the alkyl acrylate rubber in the thermoplastic resin composition. A high alkyl acrylate coverage value indicates that the aromatic vinyl compound-vinyl cyanide compound polymer grafted onto the alkyl acrylate rubber is evenly distributed. That is, the polymer evenly surrounds the rubber. In this case, gloss may increase, and tensile strength, colorability, and non-whitening properties may be excellent. In addition, as the alkyl acrylate coverage value increases, the distance between rubber particles decreases. In this case, voids caused by cracks occurring in the thermoplastic resin composition may be reduced, thereby preventing occurrence of whitening during bending.

The difference between the alkyl acrylate coverage value and the grafting degree is that the alkyl acrylate coverage value indicates the degree of dispersion of the aromatic vinyl compound-vinyl cyanide compound polymer grafted onto the alkyl acrylate in the thermoplastic resin composition, and the grafting degree indicates the amount of the aromatic vinyl compound-vinyl cyanide compound polymer grafted onto the alkyl acrylate in the alkyl acrylate-aromatic vinyl compound-vinyl cyanide compound graft copolymer.

In addition, the alkyl acrylate coverage value is quantitatively calculated based on the content of the alkyl acrylate actually present in the thermoplastic resin composition using an NMR analyzer or FT-IR, and the grafting degree is calculated based on the content of rubber components added during polymerization.

The thermoplastic resin composition may have a melt flow index (220 °C, 10 kg) of preferably 4.5 g/10 min or more, more preferably 5.5 g/10 min or more, still more preferably 6.5 g/10 min or more, still more preferably 6.5 to 15 g/10 min, still more preferably 7.5 to 13 g/10 min as measured according to ASTM D1238. Within this range, physical property balance and film processability may be excellent.

As another example, the thermoplastic resin composition may have a melt flow index of preferably 6.5 g/10 min or more, more preferably 7 g/10 min or more, still more preferably 8 g/10 min or more, still more preferably 9 g/10 min or more, still more preferably 9 to 17 g/10 min as measured at 220 °C under a load of 10 kg according to ASTM D1238. Within this range, physical property balance and film processability may be excellent.

The thermoplastic resin composition may have an Izod impact strength (specimen thickness: 1/4", room temperature) of preferably 5.3 kgf·cm/cm or more, more preferably 5.5 kgf·cm/cm or more, still more preferably 5.5 to 10 kgf·cm/cm as measured according to ASTM D256. Within this range, physical property balance and film processability may be excellent.

In the present disclosure, room temperature may be a point within the range of 20 ± 5 °C.

The thermoplastic resin composition may have a tensile strength of 300 kgf/cm$^2$ or more, preferably 350 kgf/cm$^2$ or more, more preferably 350 to 500 kgf/cm$^2$ as measured at a cross-head speed of 50 mm/min using a specimen having a thickness of 3.2 mm according to ASTM D638. Within this range, physical property balance and film processability may be excellent.

The thermoplastic resin composition may have a flexural strength of preferably 530 kgf/cm$^2$ or more, more preferably 580 kgf/cm$^2$ or more, still more preferably 580 to 750 kgf/cm$^2$ as measured at a span of 50 mm and a test speed 50 mm/min using a specimen having a thickness of 3.2 mm according to ASTM D790. Within this range, physical property balance and film processability may be excellent.

The thermoplastic resin composition may have a total light transmittance (Tt) of preferably 78 % or more, more preferably 82 % or more, still more preferably 82 to 100 % as measured using an injection specimen having a thickness of 3 mm according to ASTM D1003. Within this range, due to excellent physical property balance and transparency, the thermoplastic resin composition may be applicable to unpainted products.

The thermoplastic resin composition may have a total light transmittance (Tt) of preferably 78 % or more, more preferably 82 % or more, still more preferably 82 to 100 % as measured using a sheet having a thickness of 0.15 mm according to ASTM D1003. Within this range, due to excellent physical property balance and transparency, an aesthetically pleasing appearance may be provided.

The thermoplastic resin composition may have a haze of preferably 5.7 % or less, more preferably 4.5 % or less, still more preferably 4.1 % or less, still more preferably 0.1 to 4.1 % as measured using an injection specimen having a thickness of 3 mm according to ASTM D1003. Within this range, due to excellent physical property balance and transparency, the thermoplastic resin composition may be applicable to unpainted products.

The thermoplastic resin composition may have a haze of preferably 5.7 % or less, more preferably 4.5 % or less, still more preferably 0.1 to 4.5 % as measured using a sheet having a thickness of 0.15 mm according to ASTM D1003. Within this range, due to excellent physical property balance and transparency, an aesthetically pleasing appearance may be provided.

After an Erichsen cupping test performed by cupping a 9 mm region of the central part of a sheet having a thickness of 0.15 mm, a machine direction (MD) of 20 cm, and a transverse direction (TD) of 10 cm at a motor speed of 7 rpm for 1 minute using a ball having a diameter of 20 mm provided in an Erichsen cupping tester, when haze is measured according to ASTM D1003, the thermoplastic resin composition may have a haze of preferably 10 % or less, more preferably 9.2 % or less, still more preferably 0.1 to 9.2 %. Within this range, due to excellent physical property balance, the thermoplastic resin composition may be used as an unpainted material.

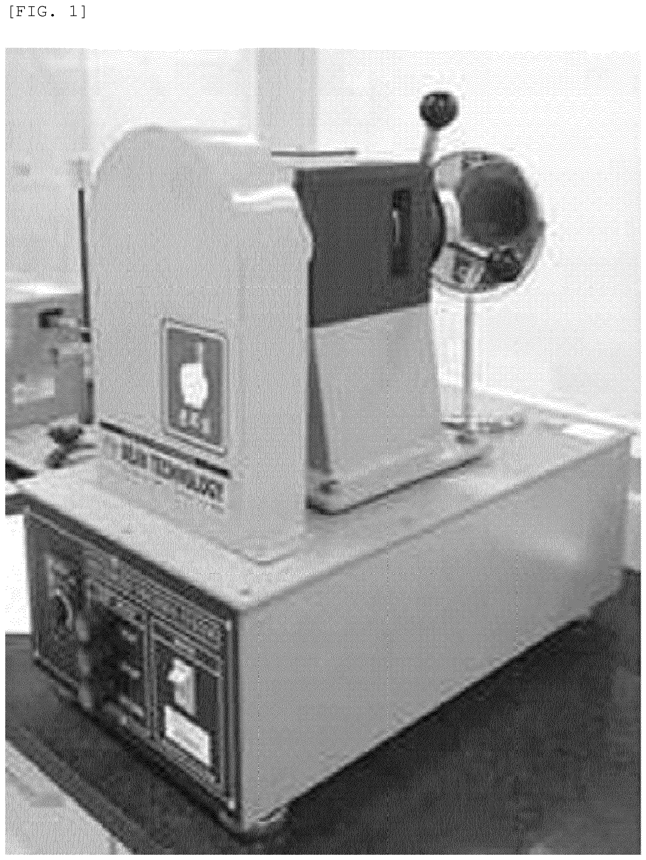

An example of the Erichsen cupping tester of the present invention is shown in FIG. 1 below.

According to the Erichsen cupping test, a sheet having a thickness of 0.15 mm, a machine direction (MD) of 20 cm, and a transverse direction (TD) of 10 cm is manufactured at a molding temperature of 230 °C, a screw rotation rate of 100 rpm, a roll temperature of 85 °C, and a roll rotation rate of 3.5 m/min using a T-die extruder (Techline 20T manufactured by Collins Co., screw diameter: 20 mm, L/D = 25), and an Erichsen cupping test is performed by cupping a 9 mm region of the sheet at a motor speed of 7 rpm for 1 minute using a ball having a diameter of 20 mm provided in an Erichsen cupping tester. Then, haze and total light transmittance are measured, and occurrence of whitening is determined.

After an Erichsen cupping test performed by cupping a 9 mm region of a sheet having a thickness of 0.15 mm, a machine direction (MD) of 20 cm, and a transverse direction (TD) of 10 cm at a motor speed of 7 rpm for 1 minute using a ball having a diameter of 20 mm provided in an Erichsen cupping tester, when total light transmittance is measured according to ASTM D1003, the thermoplastic resin composition may have a total light transmittance of preferably 80 % or more, more preferably 82 % or more, still more preferably 82 to 100 %. Within this range, due to excellent physical property balance, the thermoplastic resin composition may be used as an unpainted material.

After an Erichsen cupping test performed by cupping a 9 mm region of a sheet (made of the thermoplastic resin composition) having a thickness of 0.15 mm, a machine direction (MD) of 20 cm, and a transverse direction (TD) of 10 cm at a motor speed of 7 rpm for 1 minute using a ball having a diameter of 20 mm provided in an Erichsen cupping tester, when the surface of the sheet is evaluated by visual observation, whitening may not occur. In this case, physical property balance may be excellent. In addition, even after bending or folding, an aesthetically pleasing appearance may be realized.

The thermoplastic resin composition may have a UV-visible light transmittance of preferably 8 % or less, more preferably 6 % or less, still more preferably 4 % or less, still more preferably 3 % or less, still more preferably 0.01 to 3 % as measured at 380 nm using a sheet having a thickness of 0.15 mm and a UV-visible light spectrophotometer. Within this range, physical property balance may be excellent, and UV shielding capability may be excellent in short wavelengths with high energy, thereby preventing discoloration of a substrate.

A high UV-visible light transmittance value at 380 nm indicates that UV shielding capability is excellent.

When a sheet having a thickness of 0.15 mm as an upper sheet is laminated on an opaque PVC material having a thickness of 3 mm as a substrate, the laminated product is left in a weatherometer for 250 hours according to ASTM G155-1, the degree of discoloration is measured using a color difference meter, and weather resistance ($\triangle$E) is calculated by Equation 4 below, the thermoplastic resin composition may have a weather resistance ($\triangle$E) of preferably 5.5 or less, more preferably 4.7 or less, still more preferably 4.4 or less, still more preferably 0.01 to 4.4. Within this range, physical property balance may be excellent. In addition, discoloration may be prevented even after long-term external exposure, and thus an aesthetically pleasing appearance may be realized.

[Equation 4]

$$\Delta E = \sqrt{(L' - L_0)^2 + (a' - a_0)^2 + (b' - b_0)^2}$$

In Equation 4, L', a', and b' represent L, a, and b values measured using a CIE LAB color coordinate system after leaving a specimen, respectively. $L_0$, $a_0$, and $b_0$ represent L, a, and b values measured using the CIE LAB color coordinate system before leaving the specimen, respectively.

In the present disclosure, lamination of the upper sheet and the substrate may be performed at 160 °C using a mini hot press (QMESYS Heating Plate Tester).

When a sheet having a thickness of 0.15 mm as an upper sheet is laminated on an opaque PVC material having a thickness of 3 mm as a substrate, the laminated product is left in a weatherometer for 2,500 hours according to ASTM G155-1, the degree of discoloration is measured using a color difference meter, and weather resistance ($\Delta$E) is calculated by Equation 4, the thermoplastic resin composition may have a weather resistance ($\Delta$E) of preferably 5.7 or less, more preferably 4.5 or less, still more preferably 3.5 or less, still more preferably 0.01 to 3.5. Within this range, physical property balance may be excellent. In addition, discoloration may be prevented even after long-term external exposure, and thus an aesthetically pleasing appearance may be realized.

When a sheet having a thickness of 0.15 mm as an upper sheet is laminated on an opaque PVC material having a thickness of 3 mm as a substrate, the laminated product is left in a weatherometer for 3,000 hours according to ASTM G155-1, the degree of discoloration is measured using a color difference meter, and weather resistance ($\Delta$E) is calculated by Equation 4, the thermoplastic resin composition may have a weather resistance ($\Delta$E) of preferably 6.5 or less, more preferably 5.5 or less, still more preferably 4.5 or less, still more preferably 0.01 to 4.5. Within this range, physical property balance may be excellent. In addition, discoloration may be prevented even after long-term external exposure, and thus an aesthetically pleasing appearance may be realized.

When a film having a thickness of 0.04 mm is manufactured at a molding temperature of 230 °C, a screw rotation rate of 40 rpm, a roll temperature of 85 °C, and a roll rotation rate of 3.5 m/min using a T-die extruder, the manufactured film is cut into a fragment having a length of 50 cm, thickness is measured at five or more points in the area excluding areas of 1 to 2 cm at both ends of the fragment, and thickness deviation is calculated based on the difference between the maximum and minimum thickness, the thermoplastic resin composition may have a thickness deviation of preferably 0.02 mm or less, more preferably 0.01 mm or less. Within this range, due to excellent physical property balance and film processability, a luxurious appearance may be provided.

Techline 20T (screw diameter: 20 mm, LID = 25, Collins Co.) may be used as the T-die extruder.

In the present disclosure, thickness may be measured using ABSOLUTE ID-C1012BS (Mitutoyo Co.).

When a sheet having a thickness of 0.15 mm made of the thermoplastic resin composition (machine direction (MD) 10 cm × transverse direction (TD) 10 cm) is folded diagonally by hand, and occurrence of whitening on the bent surface is observed with the naked eye, no whitening is observed, indicating that non-whitening properties are excellent. Thus, a luxurious appearance may be provided.

When necessary, based on 100 parts by weight of the base resin, the thermoplastic resin composition may further include 0.01 to 5 parts by weight, preferably 0.05 to 3 parts by weight, more preferably 0.1 to 2 parts by weight, still more preferably 0.5 to 1 part by weight of each of one or more selected from the group consisting of a heat stabilizer, a lubricant, a dye, a pigment, a colorant, an antistatic agent, an antibacterial agent, a processing aid, a metal deactivator, a flame retardant, a smoke suppressant, an anti-drip agent, an anti-friction agent, and an anti-wear agent. Within this range, the required physical properties of the thermoplastic resin composition of the present invention may be implemented without deterioration in the intrinsic physical properties thereof.

The heat stabilizer may preferably include a first heat stabilizer and a second heat stabilizer.

For example, the first heat stabilizer may be a phenolic heat stabilizer. Preferably, the first heat stabilizer may include one or more selected from the group consisting of 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 1,6-hexanediolbis-[3-(3,5-di-t-butyl-4-hydroxyphenyl)propionate], 2,2-thiodiethylenebis-[3-(3,5-di-t-butyl-4-hydroxyphenyl)propionate], 3,5-di-t-butyl-4-hydroxybenzylphosphonatediethyl ester, tris(2,6-dimethyl-3-hydroxy-4-t-butylbenzyl)isocyanurate, tris(3,5-di-t-butyl-4-hydroxybenzyl)isocyanurate, tris[(3,5-di-t-butyl-4-hydroxyphenyl)propionyloxyethyl]isocyanurate, tris(4-t-butyl-2,6-dimethyl-3-hydroxybenzyl)isocyanurate, 2,2'-methylenebis(4-methyl-6-t-butylphenol)terephthalate, 1,3,5-trimethyl-2,4,6-tris(3,5-di-t-butyl-4-hydroxybenzyl)benzene, 3,9-bis[1,1-dimethyl-2-{β-(3-t-butyl-4-hydroxy-5-methyl-phenyl)propionyloxy}ethyl]-2,4,8,10-tetraoxaspiro[5,5]undecane, 2,2-bis[4-(2-3,5-di-t-butyl-4-hydroxyhydrocinnamoyloxy)ethoxyphenyl]propane, and β-(3,5-di-t-butyl-4-hydroxyphenyl)propionic acid stearyl ester, more preferably octadecyl 3-(3,5-di-tert-butyl-4-hydroxyphenyl)propanoate (IR1076).

For example, the second heat stabilizer may be a phosphorus heat stabilizer. Preferably, the second heat stabilizer may include one or more selected from the group consisting of bis(dialkylphenyl)pentaerythritol diphosphite ester, phosphite ester, trioctyl phosphite, trilauryl phosphite, tridecyl phosphite, (octyl)diphenyl phosphite, tris(2,4-di-t-butylphenyl) phosphite, triphenyl phosphite, tris(butoxyethyl) phosphite, tris(nonylphenyl) phosphite, distearylpentaerythritol diphosphite, tetra(tridecyl)-1,1,3-tris(2-methyl-5-t-butyl-4-hydroxy-phenyl)butane diphosphite, tetra(C12-C15 mixed alkyl)-4,4'-isopropylidenediphenyl diphosphite, tetra(tridecyl)-4,4'-butylidenebis(3-methyl-6-t-butylphenol)diphosphite, tris(mono- and di-mixed nonylphenyl)phosphite, hydrogenated-4,4'-isopropylidenediphenol polyphosphite, phenyl(4,4'-isopropylidenediphenol)pentaerythritol diphosphite, distearylpentaerythritol diphosphite, tris[4,4'-isopropylidenebis(2-t-butylphenol)] phosphite, di(isodecyl)phenyl phosphite, 4,4'-isopropylidenebis(2-t-butylphenol)bis(nonylphenyl) phosphite, bis(2,4-di-t-butyl-6-methylphenyl)ethyl phosphite, 2-[{2,4,8,10-tetra-t-butyldibenz[d,f][1.3.2]-dioxa-phospepin-6-yl} oxy]-N,N-bis [2-[{ 2,4,8,10-tetra-t-butyl-dibenz[d,f] [1.3.2]-dioxaphospepin-6-yl}oxy]ethyl]-ethanamine, and 6-[3-(3-t-butyl-4-hydroxy-5-methylphenyl)propoxy]-2,4,8,10-tetra-t-butyldibenz[d,f][1.3.2]-dioxaphospepin, more preferably tris(2,4-di-tert-butylphenyl) phosphite (IF168).

The lubricant may preferably include one or more selected from the group consisting of an aliphatic amide-based lubricant, a fatty acid ester-based lubricant, and olefin-based wax.

The aliphatic amide-based lubricant may preferably include one or more selected from the group consisting of stearamide, oleamide, erucamide, ethylene bis stearamide, and ethylene bis oleamide.

The fatty acid ester-based lubricant may preferably include one or more selected from the group consisting of a fatty acid ester of an alcohol or polyhydric alcohol, hardened oil, butyl stearate, monoglyceride stearate, pentaerythritol tetrastearate, stearylstearate, ester wax, and an alkyl phosphate ester.

The olefin-based wax may preferably be polyethylene wax.

## Method of preparing thermoplastic resin composition

A method of preparing the thermoplastic resin composition of the present invention includes a step of kneading and extruding 100 parts by weight of a base resin including an alkyl acrylate-aromatic vinyl compound-vinyl cyanide compound graft copolymer (A) containing alkyl acrylate rubber and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and 0.1 to 6 parts by weight of an acrylic copolymer (C) at 200 to 300 °C and 100 to 500 rpm. In this case, the thermoplastic resin composition has an alkyl acrylate coverage (X) value of 65 % by weight or more as calculated by Equation 1 below. In this case, due to excellent mechanical properties, such as impact strength, tensile strength, and flexural strength, and fluidity, the thermoplastic resin composition may have excellent processability and film processability, and the thermoplastic resin composition may be applicable to unpainted materials due to excellent transparency, and non-whitening properties that prevent occurrence of whitening when bent or struck. In addition, due to excellent UV shielding capability in short wavelengths with high energy, an aesthetically pleasing appearance may be provided.

[Equation 1]

$$X = \{(G-Y)/Y\} \times 100$$

In Equation 1, G represents a gel content (wt%) based on a total weight of the thermoplastic resin composition, and Y represents an alkyl acrylate content (wt%) in a gel based on a total weight of the thermoplastic resin composition.

The method of preparing the thermoplastic resin composition shares all the technical characteristics of the above-described thermoplastic resin composition. Accordingly, repeated description thereof will be omitted.

The kneading and extruding may be performed at preferably 200 to 300 °C, more preferably 210 to 260 °C, still more preferably 220 to 250 °C using an extrusion kneader. Within this range, extrusion may be performed stably and kneading may be performed efficiently. At this time, the temperature is temperature set in a cylinder.

For example, the kneading and extruding may be performed at a screw rotation rate of 100 to 500 rpm, preferably 150 to 450 rpm, more preferably 200 to 400 rpm. In this case, due to appropriate throughput per unit time, process efficiency may be excellent.

For example, the thermoplastic resin composition obtained by extrusion may be prepared in pellets using a pelletizer.

Extrusion kneaders commonly used in the art to which the present invention pertains may be used without particular limitation, and a twin-screw extrusion kneader is preferably used.

**Molded article**

A molded article of the present invention includes the thermoplastic resin composition. In this case, due to excellent mechanical properties, such as impact strength, tensile strength, and flexural strength, and fluidity, processability and film processability may be excellent. In addition, due to excellent non-whitening properties, no whitening occurs even when bent or struck, and thus the molded article may be applicable to unpainted materials. In addition, due to excellent UV shielding capability in short wavelengths with high energy, a luxurious appearance may be provided.

For example, the molded article may be a film or a sheet, preferably a finishing material, more preferably a decorative sheet for indoor furniture and decoration, a finishing material for outdoor building materials, or a finishing material for roofs. In this case, due to excellent non-whitening properties, weather resistance, and UV shielding capability, an aesthetically pleasing appearance may be obtained, and discoloration of a substrate may be prevented.

A method of manufacturing the molded article may preferably include a step of manufacturing an extrudate by kneading and extruding 100 parts by weight of a base resin including an alkyl acrylate-aromatic vinyl compound-vinyl cyanide compound graft copolymer (A) containing alkyl acrylate rubber and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and 0.1 to 6 parts by weight of an acrylic copolymer (C) at 200 to 300 °C and 100 to 500 rpm; and a step of manufacturing a molded article by molding the extrudate, wherein the extrudate has an alkyl acrylate coverage (X) value of 65 % by weight or more as calculated by Equation 1 below. In this case, due to excellent mechanical properties, such as impact strength, tensile strength, and flexural strength, and fluidity, processability and film processability may be excellent. In addition, due to excellent non-whitening properties, no whitening occurs even when bent or struck, and thus the molded article may be applicable to unpainted materials. In addition, due to excellent UV shielding capability in short wavelengths with high energy, a luxurious appearance may be provided.

[Equation 1]

$$X = \{(G-Y)/Y\} \times 100$$

In Equation 1, G represents a gel content (wt%) based on a total weight of the thermoplastic resin composition, and Y represents an alkyl acrylate content (wt%) in a gel based on a total weight of the thermoplastic resin composition.

For example, the extrudate may have a pellet shape or a plate shape.

In the present disclosure, the plate shape is not particularly limited as long as the plate shape is generally defined as a plate shape in the art to which the present invention pertains. For example, the plate shape may include a flat shape, a sheet shape, and a film shape.

In describing the thermoplastic resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

The materials used in Examples and Comparative Examples below are as follows.

* (A-1) ASA graft copolymer: An ASA graft copolymer (core (rubber): 38 % by weight of butylacrylate and 7 % by weight of styrene, shell: 4 % by weight of butylacrylate, 40 % by weight of styrene, and 11 % by weight of acrylonitrile, grafting degree: 70 %) prepared by emulsion polymerization and containing alkyl acrylate rubber having an average particle diameter of 90 to 110 nm

* (A-2) ASA graft copolymer: An ASA graft copolymer (core (rubber): 45 % by weight of butylacrylate and 5 % by weight of styrene, shell: 15 % by weight of butylacrylate, 25 % by weight of styrene, and 10 % by weight of acrylonitrile, grafting degree: 60 %) prepared by emulsion polymerization and containing alkyl acrylate rubber having an average particle diameter 90 to 110 nm

* (b-1) PMMA resin prepared by suspension polymerization: A polymethyl methacrylate resin (methyl methacrylate: 99 % by weight or more, weight average molecular weight: 80,000 g/mol)

* (b-2) SAMMA resin prepared by bulk polymerization: A methyl methacrylate-styrene-acrylonitrile copolymer (weight average molecular weight: 80,000 g/mol) including 75 % by weight of methyl methacrylate, 18 % by weight of styrene, and 7 % by weight of acrylonitrile

* (C) Acrylic copolymer: A copolymer (weight average molecular weight: 1,000,000 g/mol) including a crosslinking body including 9.9 % by weight of butyl acrylate and 0.1 % by weight of aryl methacrylate as a crosslinking agent, 76.4 % by weight of methyl methacrylate, and 13.6 % by weight of butyl acrylate

Examples 1 to 5 and Comparative Examples 1 to 3

According to the contents shown in Tables 1 and 2, the components shown in Tables 1 and 2 were fed into a twin-screw extruder. Then, melt-kneading and extrusion were performed at 230 °C and 150 rpm to prepare pellets. The melt flow index and alkyl acrylate coverage value of the prepared pellets were measured. Then, the pellets were injected at 220 °C and a screw speed of 100 to 200 rpm using an injection machine (VC 330/80 TECJ PRO, ENGEL Co.) to obtain a specimen for evaluating appearance and physical properties. In addition, a sheet having a thickness of 0.15 mm was prepared at a molding temperature of 230 °C, a screw rotation rate of 100 rpm, a roll temperature of 85 °C, and a roll rotation rate of 3.5 m/min using the prepared pellets and a T-die extruder (Techline 20T manufactured by Collins Co., screw diameter: 20 mm, L/D = 25). Then, film processability and haze, total light transmittance, and non-whitening properties after an Erichsen cupping test were measured.

[Test Examples]

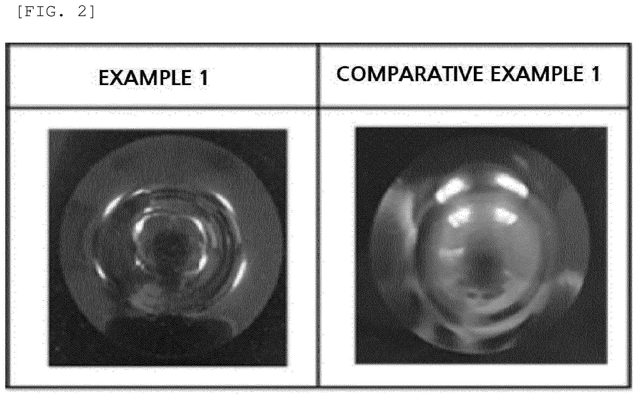

The properties of the pellets and specimens prepared in Examples 1 to 5 and Comparative Examples 1 to 3 were measured according to the following methods, and the results are shown in Tables 1 and 2 and FIG. 2 below.

Measurement methods

* Alkyl acrylate coverage value (X value, wt%): An Alkyl acrylate coverage value was calculated by Equation 1 below.

[Equation 1]

$$X = \{(G-Y)/Y\} \times 100$$

In Equation 1, G represents a gel content (wt%) based on a total weight of the thermoplastic resin composition, and Y represents an alkyl acrylate content (wt%) in a gel based on a total weight of the thermoplastic resin composition.

Here, the alkyl acrylate content in the gel was quantitatively calculated using an [1]NMR analyzer or FT-IR. Specific measurement conditions are as follows.

$^1$H NMR

- Equipment name: Bruker 600MHz NMR(AVANCE III HD) CPP BB(1H 19F tunable and broadband, with z-gradient) Prodigy Probe
- Measurement conditions: 1H NMR(zg30): ns=32, d1=5s, TCE-d2, at room temp.

FT-IR

- Equipment name: Agilent Cary 66
- Measurement conditions: ATR mode

* Gel content (%): 1 g of thermoplastic resin composition pellets was added to 30 ml of acetone, followed by stirring at 210 rpm and room temperature using an orbital shaker (equipment name: Lab companion SKC-6075) for 12 hours. Then, centrifugation was performed at 0 °C and 18,000 rpm for 3 hours using a centrifuge (Supra R30, Hanil Science Co.) to separate insoluble matter that was not dissolved in acetone, followed by drying in a forced convection oven (equipment name: Lab companion OF-12GW) set to 85 °C for 12 hours via forced circulation. Then, the weight of the insoluble matter was measured, and the gel content was calculated by Equation 2 below.

Gel content (w%) = [Weight (g) of insoluble matter (gel)/Weight (g) of sample] $\times$ 100

* Grafting degree (%): 0.5 g of a powdered graft copolymer was added to 50 ml of acetone, agitation was performed at room temperature for 12 hours, centrifugation was performed to separate only insoluble matter that was not dissolved in acetone, and the separated insoluble matter was dried for 12 hours. Then, the weight of the dried insoluble matter was measured, and grafting degree was calculated by Equation 3 below.

Grafting degree (%) = [Weight (g) of grafted monomers/Rubber weight (g)] $\times$ 100

In Equation 3, the weight (g) of grafted monomers is obtained by subtracting rubber weight (g) from the weight (g) of insoluble matter (gel) obtained by dissolving the graft copolymer in acetone and performing centrifugation, and the rubber weight (g) is the weight (g) of rubber components theoretically added to graft copolymer powder.

As a specific measurement example, when measuring the weight (g) of insoluble matter (gel), 0.5 g of a powdered graft copolymer was added to 50 ml of acetone, followed by stirring at 210 rpm and room temperature using an orbital shaker (equipment name: Lab companion SKC-6075) for 12 hours. Then, centrifugation was performed at 0 °C and 18,000 rpm for 3 hours using a centrifuge (Supra R30, Hanil Science Co.) to separate insoluble matter that was not dissolved in acetone, followed by drying in a forced convection oven (equipment name: Lab companion OF-12GW) set to 85 °C for 12 hours via forced circulation. Then, the weight of the insoluble matter (gel) was measured.

* Melt flow index (g/10 min): A melt flow index was measured at 220 °C under a load of 10 kg for 10 minutes according to ASTM D1238.
* Izod impact strength (kgf·cm/cm): Izod impact strength was measured at room temperature using an injection specimen (thickness: 1/4") according to ASTM D256.
* Tensile strength (kgf/cm$^2$): Tensile strength was measured at a cross-head speed of 50 mm/min using an injection specimen (thickness: 3.2 mm) according to ASTM D638.
* Flexural strength (kgf/cm$^2$): Flexural strength was measured at a span of 50 mm and a test speed of 50 mm/min using an injection specimen (thickness: 3.2 mm) according to ASTM D638.
* Haze (Hz, %): Haze was measured using an injection specimen according to ASTM D1003.
* Total light transmittance (Tt, %): Total light transmittance was measured using an injection specimen according to ASTM D1003.
* Haze (%) and total light transmittance (%) of a sheet after an Erichsen cupping test: After cupping a 9 mm region of a sheet having a thickness of 0.15 mm, a machine direction (MD) of 20 cm, and a transverse direction (TD) of 10 cm at a motor speed of 7 rpm for 1 minute using a ball having a diameter of 20 mm provided in an Erichsen cupping tester, haze and total light transmittance were measured according to ASTM D1003.
* Non-whitening properties: After cupping a 9 mm region of a sheet having a thickness of 0.15 mm, a machine direction (MD) of 20 cm, and a transverse direction (TD) of 10 cm at a motor speed of 7 rpm for 1 minute using an Erichsen cupping tester, whether whitening occurred on the sheet was visually determined and non-whitening properties were evaluated based on the following criteria.

    ○: No whitening occurs (non-whitening).
    △: Slight whitening occurs.
    X: Excessive whitening occurs.

* Thickness deviation of a film: A film having a thickness of 0.04 mm was manufactured at a molding temperature of 230 °C, a screw rotation rate of 40 rpm, a roll temperature of 85 °C, and a roll rotation rate of 3.5 m/min using a T-die extruder (Techline 20T manufactured by Collins Co., screw diameter: 20 mm, L/D = 25), the manufactured film was cut into a fragment having a length of 50 cm, thickness was measured at five or more points in the area excluding areas of 1 to 2 cm at both ends of the fragment, and thickness deviation was calculated based on the difference between the maximum and minimum thickness. Then, the thickness deviation was evaluated based on the following criteria.

The thickness was measured using ABSOLUTE ID-C1012BS (Mitutoyo Co.).

OK: The thickness deviation of a film is less than or equal to 0.02 mm.
NG: The thickness deviation of a film exceeds 0.02 mm.

[Table 1]

| Classification | | Example 1 | Example 2 | Example 3 | Example 4 | Example 5 |
|---|---|---|---|---|---|---|
| (A-1) ASA (wt%) | | 50 | 60 | 70 | 60 | 50 |
| (A-2) ASA (wt%) | | | | | | |
| (b-1) PMMA (wt%) | | 40 | 35 | 20 | 10 | 40 |
| (b-2) SAMMA (wt%) | | 10 | 5 | 10 | 30 | 10 |
| (C) Acrylic copolymer (parts by weight) | | 1 | 1 | 1 | 0.5 | 3 |
| Grafting degree (%) of ASA (A) | | 70 | 70 | 70 | 70 | 70 |
| X value (wt%) of thermoplastic resin composition | | 90 | 90 | 90 | 90 | 90 |
| Physical properties | | | | | | |
| Melt flow index (g/10 min) | | 12.5 | 9.8 | 7.0 | 10.7 | 5.0 |
| Injection specimen | Impact strength (kgf·cm/cm) | 5.5 | 6.0 | 7.0 | 6.0 | 5.8 |
| | Tensile strength (kgf/cm$^2$) | 390 | 360 | 300 | 360 | 395 |
| | Flexural strength (kgf/cm$^2$) | 680 | 600 | 540 | 600 | 690 |
| | Total light transmittance (%) | 83 | 87 | 89 | 80 | 80 |
| | Haze (%) | 4.0 | 3.0 | 3.5 | 4.2 | 4.1 |
| Erichsen cupping test | Total light transmittance (%) | 83 | 87 | 85 | 82 | 81 |
| | Haze (%) | 9.0 | 8.0 | 8.3 | 9.0 | 9.0 |
| | Non-whitening properties | ○ | ○ | ○ | ○ | ○ |
| Film | Thickness deviation | OK | OK | OK | OK | OK |

[Table 2]

| Classification | Comparative Example 1 | Comparative Example 2 | Comparative Example 3 |
|---|---|---|---|
| (A-1) ASA (wt%) | | 60 | 60 |
| (A-2) ASA (wt%) | 50 | | |
| (b-1) PMMA (wt%) | 40 | 35 | 10 |
| (b-2) SAMMA (wt%) | 10 | 5 | 30 |
| (C) Acrylic copolymer (parts by weight) | 1 | - | 10 |

(continued)

| Classification | | Comparative Example 1 | Comparative Example 2 | Comparative Example 3 |
|---|---|---|---|---|
| Grafting degree (%) of ASA (A) | | 60 | 70 | 70 |
| X value (wt%) of thermoplastic resin composition | | 48 | 90 | 90 |
| Physical properties | | | | |
| Melt flow index (g/10 min) | | 10.0 | 10.3 | 1.0 |
| Injection specimen | Impact strength (kgf·cm/cm) | 5.4 | 5.6 | 5.4 |
| | Tensile strength (kgf/cm$^2$) | 360 | 360 | 362 |
| | Flexural strength (kgf/cm$^2$) | 600 | 595 | 603 |
| | Total light transmittance (%) | 75 | 86 | 77 |
| | Haze (%) | 8.3 | 3.1 | 8.2 |
| Erichsen cupping test | Total light transmittance (%) | 60 | 86 | 69 |
| | Haze (%) | 28.0 | 8.1 | 15.0 |
| | Non-whitening properties | X | ○ | △ |
| Film | Thickness deviation | OK | NG | NG |

As shown in Tables 1 and 2, the thermoplastic resin compositions of Examples 1 to 5 according to the present invention exhibited mechanical properties such as impact strength, tensile strength, and flexural strength and melt flow index equal or superior to those of Comparative Examples 1 to 3 outside the range of the present invention. In addition, in the case of Examples 1 to 5, haze was low in both the injection specimen and the film after the Erichsen test, total light transmittance was high, non-whitening properties were excellent, and the thickness deviation of a film was small, indicating that processability and film processability were excellent.

Specifically, in the case of Comparative Example 1 in which the alkyl acrylate coverage value of the thermoplastic resin composition was less than the range of the present invention, the total light transmittance of the injection specimen and the total light transmittance and haze after the Erichsen cupping test were poor. In addition, non-whitening properties were poor.

In addition, in the case of Comparative Example 2 not including the acrylic copolymer (C), due to an increase in the thickness deviation of a film, film processability and film processability were reduced. In the case of Comparative Example 3 including the acrylic copolymer (C) in an amount exceeding the range of the present invention, melt flow index was very low, and total light transmittance, haze, and whitening resistance were poor in both the injection specimen and the film after an Erichsen cupping test. In addition, due to an increase in the thickness deviation of a film, film processability was reduced.

[Additional Examples]

The materials used in Additional Examples and Additional Comparative Examples below are as follows.

* (A-1) ASA graft copolymer: An ASA graft copolymer (core (rubber): 38 % by weight of butylacrylate and 7 % by weight of styrene, shell: 4 % by weight of butylacrylate, 40 % by weight of styrene, and 11 % by weight of acrylonitrile, grafting degree: 70 %) prepared by emulsion polymerization and containing alkyl acrylate rubber having an average particle diameter of 90 to 110 nm

* (A-2) ASA graft copolymer: An ASA graft copolymer (core (rubber): 45 % by weight of butylacrylate and 5 % by weight of styrene, shell: 15 % by weight of butylacrylate, 25 % by weight of styrene, and 10 % by weight of acrylonitrile, grafting degree: 60 %) prepared by emulsion polymerization and containing alkyl acrylate rubber having an average particle diameter of 90 to 110 nm

* (A-3) ASA graft copolymer: An ASA graft copolymer (core (rubber): 48 % by weight of butylacrylate and 2 % by weight of styrene, shell: 2 % by weight of butylacrylate, 37 % by weight of styrene, and 11 % by weight of acrylonitrile, grafting degree: 45 %) prepared by emulsion polymerization and containing alkyl acrylate rubber having an average particle diameter of 100 to 130 nm

* (A-4) ASA graft copolymer: An ASA graft copolymer (core (rubber): 34 % by weight of butylacrylate and 11 % by weight of styrene, shell: 4 % by weight of butylacrylate, 40 % by weight of styrene, and 11 % by weight of acrylonitrile, grafting degree: 75 %) prepared by emulsion polymerization and containing alkyl acrylate rubber having an average particle diameter of 90 to 110 nm

* (b-1) PMMA resin prepared by suspension polymerization: A polymethyl methacrylate resin (methyl methacrylate: 99 % by weight or more, weight average molecular weight: 80,000 g/mol)

* (b-2) SAMMA resin prepared by bulk polymerization: A methyl methacrylate-styrene-acrylonitrile copolymer (weight average molecular weight: 80,000 g/mol) including 75 % by weight of methyl methacrylate, 18 % by weight of styrene, and 7 % by weight of acrylonitrile

* (C) Acrylic copolymer: A copolymer (weight average molecular weight: 1,000,000 g/mol) including a crosslinking body including 9.9 % by weight of butyl acrylate and 0.1 % by weight of aryl methacrylate as a crosslinking agent, 76.4 % by weight of methyl methacrylate, and 13.6 % by weight of butyl acrylate

* (D-1) UV326 (BASF Co.): A benzotriazole-based UV stabilizer

* (D-2) UV234 (BASF Co.): A benzotriazole-based UV stabilizer

Additional Examples 1 to 7 and Additional Comparative Examples 1 to 3

According to the contents shown in Tables 3 and 4, the components shown in Tables 3 and 4 were fed into a twin-screw extruder. Then, melt-kneading and extrusion were performed at 230 °C and 150 rpm to prepare pellets. The melt flow index and alkyl acrylate coverage value of the prepared pellets were measured. Then, the pellets were injected at 220 °C and a screw speed of 100 to 200 rpm using an injection machine (VC 330/80 TECJ PRO, ENGEL Co.) to obtain a specimen for evaluating appearance and physical properties. In addition, a sheet having a thickness of 0.15 mm was prepared at a molding temperature of 230 °C, a screw rotation rate of 40 rpm, a roll temperature of 85 °C, and a roll rotation rate of 3.5 m/min using the prepared pellets and a T-die extruder (Techline 20T manufactured by Collins Co., screw diameter: 20 mm, L/D = 25). Then, film processability, total light transmittance, haze, UV-visible total light transmittance, weather resistance, and non-whitening properties were measured.

[Test Examples]

The properties of the pellets and specimens prepared in Additional Examples 1 to 7 and Additional Comparative Examples 1 to 3 were measured according to the following methods, and the results are shown in Tables 3 and 4 below.

Measurement methods

* An alkyl acrylate coverage value (X value, wt%) and a melt flow index (g/10 min) were measured according to the same measurement methods described in [Examples].

* Haze (Hz, %): Haze was measured using a sheet having a thickness of 0.15 mm according to ASTM D1003.

* Total light transmittance (Tt, %): Total light transmittance was measured using a sheet having a thickness of 0.15 mm according to ASTM D1003.

* Non-whitening properties: A sheet having a thickness of 0.15 mm (machine direction (MD) 10 cm × transverse direction (TD) 10 cm) prepared at a screw rotation rate of 160 rpm was folded diagonally by hand, and occurrence of whitening on the bent surface was observed with the naked eye. Then, non-whitening properties were evaluated based on the following criteria.

    ○: No whitening occurs (non-whitening).
    X: Excessive whitening occurs.

* UV-visible light transmittance (%): UV-visible light transmittance was measured at 380 nm using a sheet having a thickness of 0.15 mm and a UV-visible light spectrophotometer.

* Weather resistance: A sheet having a thickness of 0.15 mm as an upper sheet was laminated on an opaque PVC sheet having a thickness of 3 mm as a substrate at 160 °C using a mini hot press (QMESYS Heating Plate Tester), the laminated product was left in a weatherometer for 250 hours, 2,500 hours, and 3,000 hours according to ASTM G155-1, the degree of discoloration was measured using a color difference meter, and weather resistance ($\triangle$E) was calculated by Equation 4 below.

[Equation 4]

$$\Delta E = \sqrt{(L' - L_0)^2 + (a' - a_0)^2 + (b' - b_0)^2}$$

In Equation 4, L', a', and b' represent L, a, and b values measured using a CIE LAB color coordinate system after leaving a specimen, respectively. $L_0$, $a_0$, and $b_0$ represent L, a, and b values measured using the CIE LAB color coordinate system before leaving the specimen, respectively.

\* Thickness deviation of a film: A film having a thickness of 0.04 mm was manufactured at a molding temperature of 230 °C, a screw rotation rate of 40 rpm, a roll temperature of 85 °C, and a roll rotation rate of 3.5 m/min using a T-die extruder (Techline 20T manufactured by Collins Co., screw diameter: 20 mm, L/D = 25), the manufactured film was cut into a fragment having a length of 50 cm, thickness was measured at five or more points in the area excluding areas of 1 to 2 cm at both ends of the fragment, and thickness deviation was calculated based on the difference between the maximum and minimum thickness. Then, the thickness deviation was evaluated based on the following criteria.

The thickness was measured using ABSOLUTE ID-C1012BS (Mitutoyo Co.).

OK: The thickness deviation of a film is less than or equal to 0.02 mm.

NG: The thickness deviation of a film exceeds 0.02 mm.

[Table 3]

| Classificati on | Addition al Example 1 | Addition al Example 2 | Addition al Example 3 | Addition al Example 4 | Addition al Example 5 | Addition al Example 6 | Addition al Example 7 |
|---|---|---|---|---|---|---|---|
| (A-1) ASA (wt%) | 50 | 70 | 60 | | 60 | 60 | 60 |
| (A-4) ASA (wt%) | | | | 60 | | | |
| (b-1) PMMA (wt%) | 40 | - | 40 | 30 | 30 | 30 | 30 |
| (b-2) SAMMA (wt%) | 10 | 30 | - | 10 | 10 | 10 | 10 |
| (C) Acrylic copolymer (parts by weight) | 1 | 1 | 1 | 1 | 3 | 1 | 1 |
| (D-1) UV326 (parts by weight) | 1 | 1 | | 1 | 1 | 2.5 | 0.5 |
| (D-2) UV234 (parts by weight) | | | 1 | | | | 0.5 |
| Grafting degree (%) of ASA (A) | 70 | 70 | 70 | 75 | 70 | 70 | 70 |
| X value (wt%) of thermoplast ic resin compositio n | 90 | 90 | 90 | 120 | 90 | 90 | 90 |

(continued)

| Physical properties | | | | | | | |
|---|---|---|---|---|---|---|---|
| Melt flow index (g/10 min) | 12.5 | 7.0 | 9.2 | 12.5 | 8.5 | 9.0 | 9.1 |
| Total light transmittan ce (%) | 83 | 89 | 85 | 83 | 81 | 80 | 82 |
| Haze (%) | 4.0 | 5.5 | 4.0 | 4.0 | 4.2 | 4.0 | 4.0 |
| Non-whitening properties | ○ | ○ | ○ | ○ | ○ | ○ | ○ |
| UV-visible light transmittan ce (%) | 1.0 | 1.5 | 4.0 | 2.1 | 2.2 | 1.6 | 3.4 |
| Weather resistance (△E) after 250 hours | 4.3 | 4.5 | 5.4 | 4.3 | 4.3 | 4.0 | 4.3 |
| Weather resistance (△E) after 2,500 hours | 3.4 | 5.0 | 5.5 | 3.4 | 3.4 | 3.2 | 3.4 |
| Weather resistance (△E) after 3,000 hours | 3.8 | 5.1 | 5.9 | 3.8 | 3.8 | 3.6 | 3.8 |
| Thickness deviation of film | OK | OK | OK | OK | OK | OK | OK |

[Table 4]

| Classification | Additional Comparative Example 1 | Additional Comparative Example 2 | Additional Comparative Example 3 |
|---|---|---|---|
| (A-1) ASA (wt%) | | 65 | |
| (A-2) ASA (wt%) | | | 50 |
| (A-3) ASA (wt%) | 65 | | |
| (b-1) PMMA (wt%) | 30 | 30 | 40 |
| (b-2) SAMMA (wt%) | 5 | 5 | 10 |
| (C) Acrylic copolymer (parts by weight) | - | 10 | 1 |
| (D-1) UV326 (parts bv weight) | - | - | 1 |
| (D-2) UV234 (parts bv weight) | - | 1 | - |
| Grafting degree (%) of ASA (A) | 45 | 70 | 60 |
| X value (wt%) of thermoplastic resin composition | 85 | 90 | 48 |
| Physical properties | | | |
| Melt flow index (g/10 min) | 10.2 | 1.5 | 12.5 |
| Total light transmittance (%) | 80 | 78 | 83 |
| Haze (%) | 5.0 | 5.8 | 3.5 |
| Non-whitening properties | X | ○ | X |
| UV-visible light transmittance (%) | 81.3 | 5.7 | 5.4 |
| Weather resistance (△E) after 250 hours | 6.3 | 6.3 | 4.4 |

(continued)

| Physical properties | | | |
|---|---|---|---|
| Weather resistance (∆E) after 500 hours | 8.0 | 7.0 | 3.6 |
| Weather resistance (∆E) after 3,000 hours | 8.9 | 7.9 | 4.0 |
| Thickness deviation of film | NG | NG | OK |

As shown in Table 3 and 4, in the case of the thermoplastic resin compositions of Additional Examples 1 to 7 according to the present invention, compared to Additional Comparative Examples 1 to 3 outside the range of the present invention, melt flow index, total light transmittance, haze, non-whitening properties, UV-visible light transmittance, weather resistance, and thickness deviation were excellent. These results indicated that, in the case of Additional Examples 1 to 7, transparency, film processability, and UV shielding capability were excellent.

Specifically, in the case of Additional Comparative Example 1 not including the acrylic copolymer (C) and the benzotriazole-based UV stabilizer (D), non-whitening properties and weather resistance were poor, the thickness deviation of a film was large, and UV-visible light transmittance was very poor.

In addition, in the case of Additional Comparative Example 2 including an excess of the acrylic copolymer (C), melt flow index was small, and weather resistance and thickness deviation were poor. In the case of Additional Comparative Example 3 including the ASA graft copolymer (A-2), the alkyl acrylate coverage value was less than the range of the present invention, and non-whitening properties were poor.

In conclusion, when a thermoplastic resin composition is prepared by including a base resin including an alkyl acrylate-aromatic vinyl compound-vinyl cyanide compound graft copolymer (A) and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and an acrylic copolymer (C) in a predetermined content ratio and adjusting an alkyl acrylate coverage value in the thermoplastic resin composition within a predetermined range, due to excellent mechanical properties, such as impact strength, tensile strength, and flexural strength, and fluidity, the thermoplastic resin composition may have excellent processability and film processability. In addition, the thermoplastic resin composition may be applicable to unpainted materials due to excellent transparency and non-whitening properties that prevent occurrence of whitening when bent or struck. Furthermore, when the benzotriazole-based UV stabilizer (D) is included, UV shielding capability may be excellent in short wavelengths with high energy, and thus an aesthetically pleasing appearance may be realized.

In addition, as shown in FIG. 2 below, in the case of Example 1 according to the present invention, compared to Comparative Example 1, after an Erichsen cupping test, no whitening occurred.

**Claims**

1. A thermoplastic resin composition, comprising:

100 parts by weight of a base resin comprising an alkyl acrylate-aromatic vinyl compound-vinyl cyanide compound graft copolymer (A) containing alkyl acrylate rubber, and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and
0.1 to 6 parts by weight of an acrylic copolymer (C),
wherein the thermoplastic resin composition has an alkyl acrylate coverage (X) value of 65 % by weight or more as calculated by Equation 1 below.

[Equation 1]

$$X = \{(G-Y)/Y\} \times 100,$$

wherein G represents a gel content (wt%) based on a total weight of the thermoplastic resin composition, and Y represents an alkyl acrylate content (wt%) in a gel based on a total weight of the thermoplastic resin composition.

**2.** The thermoplastic resin composition according to claim 1, wherein the base resin comprises 41 to 80 % by weight of the alkyl acrylate-aromatic vinyl compound-vinyl cyanide compound graft copolymer (A) containing alkyl acrylate rubber having an average particle diameter of 50 to 120 nm and 20 to 59 % by weight of the one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2).

**3.** The thermoplastic resin composition according to claim 1, wherein the base resin comprises 45 to 75 % by weight of the graft copolymer (A), 5 to 45 % by weight of the polymer (b-1), and 1 to 35 % by weight of the polymer (b-2).

**4.** The thermoplastic resin composition according to claim 1, wherein the thermoplastic resin composition comprises 0.3 to 4.5 parts by weight of a benzotriazole-based UV stabilizer (D).

**5.** The thermoplastic resin composition according to claim 4, wherein the benzotriazole-based UV stabilizer (D) comprises one or more selected from the group consisting of 2-(2'-hydroxy-5'-t-octylphenyl)-benzotriazole, 2-(2'-hydroxy-5'-methylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chloro-benzotriazole, 2-(2'-hydroxy-3,5-di-tert-amylphenyl)benzotriazole, 2-[2'-hydroxy-3',5'-di(1,1-dimethylbenzyl)phenyl]-2H-benzotriazole, 2-(2'-hydroxy-3',5'-di-t-butylphenyl)benzotriazole, and 2-(2H-benzotrizole-2-yl)-4-(1,1,3,3-tetramethylbutyl)phenol.

**6.** The thermoplastic resin composition according to claim 1, wherein, based on a total weight of the graft copolymer (A), the graft copolymer (A) comprises 25 to 50 % by weight of alkyl acrylate rubber having an average particle diameter of 50 to 120 nm and 50 to 75 % by weight of an aromatic vinyl compound-vinyl cyanide compound copolymer surrounding the alkyl acrylate rubber.

**7.** The thermoplastic resin composition according to claim 1, wherein, based on a total weight of the graft copolymer (A), the graft copolymer (A) comprises 25 to 50 % by weight of alkyl acrylate rubber and 50 to 75 % by weight of an aromatic vinyl compound-vinyl cyanide compound copolymer surrounding the alkyl acrylate rubber.

**8.** The thermoplastic resin composition according to claim 1, wherein the graft copolymer (A) has a grafting degree of 58 % or more as calculated by Equation 3 below.

Grafting degree (%) = [Weight (g) of grafted monomers/Rubber weight (g)] $\times$ 100,

wherein the weight (g) of grafted monomers is obtained by subtracting rubber weight (g) from a weight (g) of insoluble matter (gel) obtained by dissolving the graft copolymer in acetone and performing centrifugation, and the rubber weight (g) is a weight (g) of rubber components theoretically added to graft copolymer powder.

**9.** The thermoplastic resin composition according to claim 1, wherein the polymer (b-1) and the polymer (b-2) each independently have a weight average molecular weight of 50,000 to 150,000 g/mol.

**10.** The thermoplastic resin composition according to claim 1, wherein the polymer (b-2) comprises 60 to 90 % by weight of an alkyl (meth)acrylate, 5 to 30 % by weight of an aromatic vinyl compound, and 1 to 20 % by weight of a vinyl cyanide compound.

**11.** The thermoplastic resin composition according to claim 1, wherein, based on a total weight of the acrylic copolymer (C), the acrylic copolymer (C) comprises an alkyl acrylate-based crosslinking body comprising 5 to 20 % by weight of an alkyl acrylate monomer and 0.01 to 0.3 % by weight of a crosslinking agent; 54 to 90 % by weight of a methyl methacrylate monomer; and 4 to 40 % by weight of one or more selected from the group consisting of an alkyl acrylate monomer and an alkyl methacrylate monomer.

**12.** The thermoplastic resin composition according to claim 11, wherein the crosslinking agent comprises one or more selected from the group consisting of aryl methacrylate, trimethylol propane, triacrylate, and divinyl benzene.

**13.** The thermoplastic resin composition according to claim 1, wherein the acrylic copolymer (C) has a weight average molecular weight of 900,000 to 1,300,000 g/mol.

**14.** The thermoplastic resin composition according to claim 1, wherein the thermoplastic resin composition has a haze of 5.7 % or less as measured using an injection specimen according to ASTM D1003.

15. The thermoplastic resin composition according to claim 1, wherein the thermoplastic resin composition has a haze of 10 % or less as measured according to ASTM D1003 after an Erichsen cupping test performed by cupping a 9 mm region of a film having a thickness of 0.15 mm at a motor speed of 7 rpm for 1 minute using an Erichsen cupping tester.

16. The thermoplastic resin composition according to claim 1, wherein the thermoplastic resin composition has a light transmittance of 8 % or less as measured at 380 nm using a sheet having a thickness of 0.15 mm and a UV-visible light spectrophotometer.

17. A method of preparing a thermoplastic resin composition, comprising kneading and extruding 100 parts by weight of a base resin comprising an alkyl acrylate-aromatic vinyl compound-vinyl cyanide compound graft copolymer (A) containing alkyl acrylate rubber and one or more (B) selected from the group consisting of a (meth)acrylic acid alkyl ester polymer (b-1) and a (meth)acrylic acid alkyl ester compound-aromatic vinyl compound-vinyl cyanide compound copolymer (b-2); and 0.1 to 6 parts by weight of an acrylic copolymer (C) at 200 to 300 °C and 100 to 500 rpm,

wherein the thermoplastic resin composition has an alkyl acrylate coverage (X) value of 65 % by weight or more as calculated by Equation 1 below.

[Equation 1]

$$X = \{(G-Y)/Y\} \times 100,$$

wherein G represents a gel content (wt%) based on a total weight of the thermoplastic resin composition, and Y represents an alkyl acrylate content (wt%) in a gel based on a total weight of the thermoplastic resin composition.

18. A molded article, comprising the thermoplastic resin composition according to any one of claims 1 to 16.

[FIG. 1]

[FIG. 2]

| EXAMPLE 1 | COMPARATIVE EXAMPLE 1 |

## INTERNATIONAL SEARCH REPORT

| | |
|---|---|
| International application No. | **PCT/KR2023/012213** |

| | |
|---|---|
| **A.** | **CLASSIFICATION OF SUBJECT MATTER** |

**C08L 51/04**(2006.01)i; **C08L 33/06**(2006.01)i; **C08L 33/12**(2006.01)i; **C08L 25/08**(2006.01)i; **C08K 5/00**(2006.01)i; **C08K 5/3475**(2006.01)i; **C08K 5/101**(2006.01)i

According to International Patent Classification (IPC) or to both national classification and IPC

| | |
|---|---|
| **B.** | **FIELDS SEARCHED** |

Minimum documentation searched (classification system followed by classification symbols)

C08L 51/04(2006.01); C08F 220/06(2006.01); C08F 255/10(2006.01); C08L 101/00(2006.01); C08L 33/00(2006.01); C08L 33/06(2006.01); C08L 67/03(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 알킬 아크릴레이트-방향족 비닐 화합물-비닐시안 화합물 그라프트 공중합체 (alkyl acrylate-aromatic vinyl compound-vinyl cyan compound graft copolymer), (메트)아크릴산 알킬 에스테르 중합체 ((meth)acrylic acid alkyl ester polymer), (메트)아크릴산 알킬 에스테르 화합물-방향족 비닐 화합물 -비닐시안화합물 공중합체((meth)acrylic acid alkyl ester compound-aromatic vinyl compound-vinyl cyan compound copolymer), 아크릴계 공중합체(acrylic copolymer), 열가소성(thermoplastic)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2022-0106411 A (LG CHEM, LTD.) 29 July 2022 (2022-07-29) See claims 1-12; paragraphs [0101] and [0134]-[0144]; and table 1 (examples 1-7). | 1-18 |
| Y | KR 10-2015-0037395 A (CHEIL INDUSTRIES INC.) 08 April 2015 (2015-04-08) See claims 1 and 3; and paragraphs [0001]-[0058]. | 1-18 |
| Y | KR 10-2005-0024038 A (LG CHEM, LTD.) 10 March 2005 (2005-03-10) See claims 1, 4 and 9. | 11-13 |
| A | JP 07-150052 A (MITSUBISHI RAYON CO., LTD.) 13 June 1995 (1995-06-13) See entire document. | 1-18 |

☑ Further documents are listed in the continuation of Box C.    ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **15 November 2023** | **15 November 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2023/012213** |

**C.      DOCUMENTS CONSIDERED TO BE RELEVANT**

| Category* | Citation of document, with indication, where appropriate, of the relevant passages | Relevant to claim No. |
|---|---|---|
| A | KR 10-1276454 B1 (SAMYANG CORPORATION) 19 June 2013 (2013-06-19)<br>See entire document. | 1-18 |

Form PCT/ISA/210 (second sheet) (July 2022)

**INTERNATIONAL SEARCH REPORT**
Information on patent family members

International application No.

**PCT/KR2023/012213**

| Patent document cited in search report | | | Publication date (day/month/year) | Patent family member(s) | | | Publication date (day/month/year) |
|---|---|---|---|---|---|---|---|
| KR | 10-2022-0106411 | A | 29 July 2022 | CN | 115244129 | A | 25 October 2022 |
| | | | | EP | 4098698 | A1 | 07 December 2022 |
| | | | | EP | 4098698 | A4 | 13 September 2023 |
| | | | | JP | 2023-517203 | A | 24 April 2023 |
| | | | | TW | 202237736 | A | 01 October 2022 |
| | | | | US | 2023-0131897 | A1 | 27 April 2023 |
| | | | | WO | 2022-158709 | A1 | 28 July 2022 |
| KR | 10-2015-0037395 | A | 08 April 2015 | KR | 10-1688684 | B1 | 21 December 2016 |
| KR | 10-2005-0024038 | A | 10 March 2005 | CN | 100355794 | C | 19 December 2007 |
| | | | | CN | 100780863 | A | 31 May 2006 |
| | | | | EP | 1658317 | A1 | 24 May 2006 |
| | | | | EP | 1658317 | A4 | 18 April 2007 |
| | | | | EP | 1658317 | B1 | 07 November 2012 |
| | | | | JP | 2006-524268 | A | 26 October 2006 |
| | | | | JP | 4901468 | B2 | 21 March 2012 |
| | | | | KR | 10-0548630 | B1 | 31 January 2006 |
| | | | | US | 2006-0194926 | A1 | 31 August 2006 |
| | | | | US | 7632892 | B2 | 15 December 2009 |
| | | | | WO | 2005-023882 | A1 | 17 March 2005 |
| JP | 07-150052 | A | 13 June 1995 | CA | 2117300 | C | 17 May 2005 |
| | | | | DE | 69422335 | T2 | 07 September 2000 |
| | | | | EP | 0627469 | A1 | 07 December 1994 |
| | | | | EP | 0627469 | B1 | 29 December 1999 |
| | | | | JP | 07-238202 | A | 12 September 1995 |
| | | | | JP | 2958232 | B2 | 06 October 1999 |
| | | | | JP | 3090844 | B2 | 25 September 2000 |
| | | | | KR | 10-0321869 | B1 | 13 August 2002 |
| | | | | TW | 325491 | B | 21 January 1998 |
| | | | | US | 5543463 | A | 06 August 1996 |
| | | | | US | 5560994 | A | 01 October 1996 |
| | | | | US | 5563227 | A | 08 October 1996 |
| KR | 10-1276454 | B1 | 19 June 2013 | KR | 10-2011-0065848 | A | 16 June 2011 |

Form PCT/ISA/210 (patent family annex) (July 2022)

**REFERENCES CITED IN THE DESCRIPTION**

**Patent documents cited in the description**

- KR 1020220135354
- KR 1020220135348

- KR 20090095764 A